(19) Europäisches Patentamt
European Patent Office
Office européen des brevets

(11) **EP 3 995 462 A1**

(12) **EUROPÄISCHE PATENTANMELDUNG**

(43) Veröffentlichungstag:
**11.05.2022 Patentblatt 2022/19**

(21) Anmeldenummer: **21205687.3**

(22) Anmeldetag: **29.10.2021**

(51) Internationale Patentklassifikation (IPC):
**C03C 8/04** (2006.01) **C03C 8/14** (2006.01)
**C03C 8/16** (2006.01) **C03C 8/20** (2006.01)
**C03C 17/00** (2006.01)

(52) Gemeinsame Patentklassifikation (CPC):
**C03C 8/04; C03C 8/14; C03C 8/16; C03C 8/20; C03C 17/008;** C03C 2217/452; C03C 2217/475; C03C 2217/48; C03C 2217/485

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **05.11.2020 DE 102020129161**

(71) Anmelder: **SCHOTT AG**
**55122 Mainz (DE)**

(72) Erfinder:
• **MENKE-BERG, Yvonne**
**65197 Wiesbaden (DE)**
• **STEIGENBERGER, Vera**
**65474 Bischofsheim (DE)**
• **MOOSE, Matthew**
**Sweetwater, TN, 37874 (US)**

(74) Vertreter: **Blumbach · Zinngrebe Patentanwälte PartG mbB**
**Alexandrastraße 5**
**65187 Wiesbaden (DE)**

(54) **GLAS- ODER GLASKERAMIKELEMENT UMFASSEND GLAS- ODER GLASKERAMIKSUBSTRAT UND BESCHICHTUNG SOWIE VERFAHREN ZU DESSEN HERSTELLUNG UND DESSEN VERWENDUNG**

(57) Die Erfindung betrifft allgemein Glas- oder Glaskeramikelemente für Haushalts- und/oder Heizgeräte umfassend wenigstens ein Glas- oder Glaskeramiksubstrat und eine auf wenigstens einer der Hauptflächen zumindest bereichsweise angeordnete Beschichtung. Des Weiteren betrifft die vorliegende Erfindung ein Verfahren zur Herstellung eines solchen Elements sowie dessen Verwendung.

Fig. 1

**Beschreibung**

Gebiet der Erfindung

Die vorliegende Erfindung betrifft ein Glas- oder Glaskeramikelement geeignet für die Anwendung bei erhöhten Temperaturen, welches ein Glas- oder Glaskeramiksubstrat sowie eine auf wenigstens einer der Hauptflächen des Glas- oder Glaskeramikelements zumindest bereichs- oder abschnittsweise angeordnete Beschichtung umfasst. Des Weiteren betrifft die vorliegende Erfindung ein Verfahren zur Herstellung eines solchen Glas- oder Glaskeramikelements sowie dessen Verwendung.

Hintergrund der Erfindung

Glas- oder Glaskeramikelemente werden häufig in Anwendungen eingesetzt, bei welchen es betrieblich zu erhöhten Temperaturen kommen kann. Bekannt ist beispielsweise, Glas- oder Glaskeramikelemente als Kochflächenabdeckungen (häufig auch einfach als "Kochflächen" bezeichnet) oder Sichtscheiben beispielsweise in Kaminen oder in Backöfen einzusetzen.

Dabei kann es zu einer erhöhten Temperatur am Glaselement, beispielsweise der Sichtscheibe, kommen, und zwar auch an der Seite des Glaselements, welche einer Wärmequelle abgewandt ist. Dies ist allerdings ungünstig, da diese Seite des Glaselements die ist, die einem Bediener eines Geräts oder eines Nutzers einer Beheizungseinrichtung, wie eines Kamins, zugewandt ist und die also von diesem berührt werden kann. Bei einer hohen Oberflächentemperatur dieser dem Bediener zugewandten Seite ist es daher möglich, dass es zu Verletzungen, beispielsweise Verbrennungen, kommt.

Nachteilig kann es je nach genauer Anwendung weiterhin auch sein, wenn die in einem Gerät erzeugte Wärme durch eine Sichtscheibe oder eine Abdeckplatte nach außen tritt. Denn in diesem Fall wirkt die Sichtscheibe wie eine Wärmesenke. Dies kann beispielsweise bei Kaminen die Effizienz des Verbrennungsvorgangs herabsetzen und zu erhöhter Rußbildung führen. Für den Fall, dass das Glaselement als Sichtscheibe in einem Backofen, beispielsweise in einer Backofentür, verwendet wird, ist es ebenfalls vorteilhaft, wenn die Backofentür nicht als Wärmesenke wirkt, sondern die erzeugte Wärme in der Ofenmuffel verbleibt. Auf diese Weise kann der Garvorgang der Speise in der Ofenmuffel nämlich verbessert werden.

Um die Außenseite einer Backofentür möglichst kühl zu halten, werden üblicherweise mehrere Scheiben verwendet, oft drei oder vier Scheiben. Die innerste Scheibe wird dabei oft mit beispielsweise metallischen Bändern oder ähnlichem versehen, um Verbrennungen zu vermeiden und/oder Sicherheitsanforderungen zu entsprechen.

Um möglichst homogene mechanische Eigenschaften der Scheibe zu erzielen, existieren Ansätze, beispielsweise zwei Schichten zu verwenden. Beispielsweise beschreibt die französische Anmeldung FR 3052769 A1 eine Scheibe, auf die zwei Schichten, nämlich eine TCO (transparent conductive oxide)-Schicht und eine dekorative Beschichtung, welche emaillebasiert ist, aufgebracht wurden. Nachteilig hieran ist jedoch, dass TCO-Schichten relativ kratzempfindlich sind und daher das Handling solcher Scheiben erschwert ist. Zudem sind die Pigmente der dekorativen Beschichtung mit einer Partikelgröße zwischen 500 nm bis 10 $\mu$m so groß, dass an den Partikeln eine effiziente Streuung der Wärmestrahlung erfolgen kann. Durch diese relativ große Größe der Pigmentpartikel sind sie jedoch nur schwer zu verarbeiten und zum Druck solcher Schichten beispielsweise in einem Siebdruckprozess müssen entsprechend grobmaschige Siebe verwendet werden, sodass die damit mögliche Auflösung des Dekors begrenzt ist.

Das US-amerikanische Patent US 5 898 180 beschreibt die Verwendung von nichtabsorbierenden, IR-reflektierenden Pigmenten zur Beschichtung einer Ofenmuffel.

Weiterhin beschreibt die internationale Patentanmeldung WO 2019/101873 A1 eine Dekorbeschichtung mit erhöhter IR-Reflexion. Die Beschichtung umfasst eine Glasmatrix und IR-reflektierende Pigmente mit einem nach ASTM G 173 ermittelten TSR-Wert von zumindest 20%. Bei einer Wellenlänge von 1500 nm weist die Beschichtung eine Remission, gemessen gemäß ISO 13468 von zumindest 35 % auf.

Allerdings hat sich gezeigt, dass die mit den Beschichtungen nach dem Stand der Technik erzielte Reduktion der Oberflächentemperatur einer Oberfläche eines Glaselements noch immer nicht ausreicht.

Weiterhin sind sogenannte Wärmedämmschichten (oder auch thermal barrier coatings, TBC) beispielsweise für den Schutz von Maschinenbauteilen wie Turbinen, die bei sehr hohen Temperaturen von beispielsweise über 1000°C eingesetzt werden, bekannt. Es handelt sich dabei in der Regel um komplex aufgebaute Beschichtungssysteme umfassend wenigstens ein keramisches Material. Das keramische Material wird dabei meist in einem Plasmaspritzverfahren aufgebracht, wobei eine poröse Beschichtung als Bestandteil des TBC-Beschichtungssystems erhalten wird. Die Korngröße des keramischen Materials beträgt üblicherweise zwischen 5 $\mu$m und 120 $\mu$m. Eine gezielte, lediglich bereichsweise Auftragung der das keramische Material umfassenden Beschichtung ist mittels eines Plasmaspritzens nicht möglich. Auch besteht die Gefahr, durch Plasmaspritzen, bei dem die Teilchen des Beschichtungsmaterials auf die Oberfläche des Substrats geschleudert werden, die Oberfläche eines Glassubstrats massiv zu beschädigen, was eine starke Reduktion der Festigkeit zur Folge hätte.

Wärmedämmschichten sind daher zur Beschichtung von Glas- oder Glaskeramikelementen nicht geeignet.

Es besteht daher Bedarf an verbesserten Glas- oder Glaskeramikelementen.

Aufgabe der Erfindung

Die Aufgabe der Erfindung besteht in der Bereitstellung von Glas- oder Glaskeramikelementen, die geeignet sind als Sichtscheiben und/oder Abdeckplatten bei erhöhter Temperatur und erniedrigter Oberflächentemperatur auf der der Wärmequelle abgewandten Seite.

Zusammenfassung der Erfindung

Die Aufgabe wird gelöst durch den Gegenstand der unabhängigen Ansprüche. Bevorzugte oder spezielle Ausführungsformen sind Gegenstand der abhängigen Ansprüche, der Beschreibung und der Zeichnungen.

Die vorliegende Offenbarung betrifft daher ein Glas- oder Glaskeramikelement für Haushalts- und/oder Heizgeräte umfassend ein transparentes Glas- oder Glaskeramiksubstrat und eine auf wenigstens einer Hauptfläche des Glas- oder Glaskeramiksubstrats zumindest bereichsweise angeordnete Beschichtung, wobei die Beschichtung eine glasbasierte Beschichtung, vorzugsweise eine Emaillebeschichtung, ist, und wenigstens ein Pigment und wenigstens einen Füllstoff umfasst, wobei das wenigstens eine Pigment vorzugsweise ein IR-reflektierendes Material umfasst und wobei der wenigstens eine Füllstoff ein Material mit einer spezifischen molaren Wärmekapazität von höchstens 5 mJ/(mol·K) und bevorzugt einer Wärmeleitfähigkeit von höchstens 12 W/(m·K) umfasst.

Bei der spezifischen molaren Wärmekapazität handelt es sich um die auf die molare Masse bezogene spezifische Wärmekapazität. Die thermische Diffusivität ist die auf Dichte und spezifische Wärmekapazität bezogene thermische Leitfähigkeit. In der folgenden Tabelle sind entsprechende Eigenschaften von Materialien aufgeführt.

Tabelle 1

| | Wärmeleitfähigkeit [W/(m·K)] | Spezifische Wärmekapazität [J/(g·K)] | Molare Masse [g/mol] | spezifische molare Wärmekapazität [mJ/(mol·K)] | Dichte [kg/m³] | Thermische Diffusivität [mm²/s] |
|---|---|---|---|---|---|---|
| $TiO_2$ | 3-4 | 0,70 | 79,87 | 8,76 | 4230 | 1,18 |
| $Y_2O_3$ | 8-12 | 0,45 | 225,81 | 1,99 | 5010 | 1,55 |
| $ZrO_2$ | 1,5-3 | 0,45 | 123,22 | 3,65 | 5680 | 1,37 |
| $La_2Zr_2O_7$ | 2 | 0,35 | 572,26 | 0,61 | 6050 | 1,65 |
| $Gd_2Zr_2O_7$ | 1,8 | 0,42 | 608,94 | 0,69 | 6950 | 1,20 |
| $Nd_2Zr_2O_7$ | 1,25 | 0,4 | 582,925 | 0,69 | 6410 | 1,37 |
| $La2Hf_2O_7$ | 1,93 | 0,3 | 572,25194 | 0,52 | 7940 | 1,47 |
| 8YSZ | 2,09 | 0,55 | 131,42896 | 4,18 | 6000 | 1,06 |

Eine solche Ausgestaltung weist eine Reihe von Vorteilen auf.

Das Glas- oder Glaskeramikelement umfasst ein transparentes Glas- oder Glaskeramiksubstrat sowie eine Beschichtung, welche auf wenigstens einer Hauptfläche des Glas- oder Glaskeramiksubstrats in wenigstens einem Bereich angeordnet ist. Die Beschichtung ist dabei so ausgestaltet, dass sie wenigstens ein Pigment und wenigstens einen Füllstoff umfasst und als glasbasierte Beschichtung, insbesondere eine Emaillebeschichtung, ausgebildet ist.

Das Glas- oder Glaskeramiksubstrat ist transparent ausgebildet, weist also einen Transmissionsgrad im Wellenlängenbereich von 380 nm bis 780 nm von wenigstens 40 % auf. Insbesondere kann es bevorzugt sein, dass das Glas- oder Glaskeramiksubstrat nicht nur transparent, sondern auch ungefärbt vorliegt, wobei hier unter einer transparenten ungefärbten Ausbildung des Glas- oder Glaskeramiksubstrats verstanden wird, dass dieses Substrat im Bereich des sichtbaren Lichts einen vorzugsweise neutralen Farbort aufweist sowie weiterhin nur eine geringe Absorption. Dies kann ganz besonders vorteilhaft sein, wenn das Glas- oder Glaskeramikelement als Sichtscheibe in einem Haushalts- und/oder Heizgerät, beispielsweise einem Backofen oder einem Kamin, verwendet werden soll. Denn in diesem Fall ist auch das Glas- oder Glaskeramikelement in den nicht mit der Beschichtung belegten Bereichen oder in dem nicht mit der Beschichtung belegten Bereich mit einer entsprechenden Transmission ausgebildet, sodass eine gute Durchsicht durch das Element gewährleistet ist.

Darunter, dass eine Beschichtung ein Pigment (oder in entsprechender Weise einen Füllstoff) umfasst, wird verstanden, dass die Beschichtung ein Pigment, also einen Farbkörper, umfasst. Pigmente sind dabei bekanntermaßen - ebenso wie Füllstoffe - Materialien, welche üblicherweise in Pulverform vorliegen. Daher wird im Rahmen der vorliegenden Offenbarung der Ausdruck "ein Pigment/einen Füllstoff umfassen" so verstanden, dass "ein Pigment umfassend Pigmentpartikel/ein Füllstoff umfassend Füllstoffpartikel umfasst sind oder umfasst werden".

Mit anderen Worten ist die Beschichtung nach der vorliegenden Offenbarung als pigmentierte oder allgemeiner als Partikel umfassende Beschichtung ausgebildet.

Eine solche Ausgestaltung der Beschichtung als Partikel umfassende Beschichtung, insbesondere auch als pigmentierte Beschichtung, kann insbesondere dann von Vorteil sein, wenn es darum geht, eine bestimmte Abdeckwirkung zu erzielen, beispielsweise, wenn aus Sicherheitsgründen nur bestimmte Bereiche eines Glaselements, beispielsweise einer Abdeckplatte oder Sichtscheibe frei bleiben dürfen, beispielsweise um bestimmte Funktionsbereiche als solche zu kennzeichnen oder als mechanischer Schutz besonders beanspruchter Bereiche eines Glaselements, insbesondere in einem Randbereich.

Das wenigstens eine Pigment umfasst vorzugsweise ein IR-reflektierendes Material. Eine solche Ausgestaltung ist insbesondere dann sinnvoll, wenn die Oberflächentemperatur einer Sichtscheibe oder Abdeckplatte an der dem Benutzer der Scheibe bzw. eines Geräts oder einer Vorrichtung, in oder an welche das Glaselement verbaut oder angebaut ist, zugewandten Seite möglichst gering gehalten werden soll. Eine solche Ausgestaltung ist auch beispielsweise aus der eigenen Anmeldung der Anmelderin mit der Nummer WO 2019/101873 A1 bekannt. Unter einem IR-reflektierenden Pigment wird im Rahmen der vorliegenden Offenbarung insbesondere ein Pigment verstanden, das einen TSR-Wert von zumindest 20 % gemessen gemäß der Norm ASTM G173 aufweist. Auf diese Weise kann eine Beschichtung erhalten werden, welche bei einer Wellenlänge von 1500 nm eine Remission von zumindest 35% gemessen gemäß der Messnorm ISO 134 68 zeigt. Allerdings hat sich überraschenderweise gezeigt, dass es bei einer Ausbildung des Pigments als Absorptionspigment zum Erzielen einer geringen Oberflächentemperatur beispielsweise einer Scheibe bereits ausreichend ist, wenn die Beschichtung Füllstoffe, wie sie im Folgenden noch genauer beschrieben werden, umfasst. Mit anderen Worten ist es nicht zwingend erforderlich, dass das Pigment als IR-reflektierendes Pigment ausgestaltet ist.

Unter einem Pigment wird im Rahmen der vorliegenden Offenbarung ein sogenannter Farbkörper verstanden, also ein Stoff oder Material, welcher einem anderen Material, beispielsweise einer Beschichtungsmatrix oder einem Bindemittel, zugesetzt wird und diesem eine Farbe und/oder einen bestimmten Effekt verleiht. Im Gegensatz zu Farbstoffen lösen sich Pigmente in dem Material, zu welchem sie zugesetzt werden, aber nicht oder zumindest nicht vollständig auf, sondern verbleiben zumindest teilweise, vorzugsweise sogar vollständig, als Feststoff oder Feststoffpartikel erhalten.

Es ist weiterhin bekannt und vorteilhaft, einer Beschichtung Füllstoffe zuzusetzen. Beispielsweise werden Füllstoffe eingesetzt, um das Verhalten eines Beschichtungsmittels, wie einer Paste, positiv zu beeinflussen, beispielsweise über eine sterische Hinderung von Koagulation oder zur Einstellung einer geeigneten Rheologie des Beschichtungsmittels. Auch die Kratzfestigkeit einer Beschichtung kann vorteilhaft erhöht werden, indem ein entsprechender Füllstoff der Beschichtung zugesetzt wird.

Füllstoffe zeichnen sich im Rahmen der vorliegenden Offenbarung generell dadurch aus, dass sie nicht in der Glasmatrix gelöst sind oder werden, sondern als fester, vorzugsweise kristalliner, Stoff umfassend Partikel vorliegen. Die Schmelztemperatur liegt i.d.R. deutlich oberhalb der Schmelztemperatur von sogenannten Frittengläsern, also Gläsern, die beispielsweise als Glasfluss oder Glasfritte in einer als Emaillebeschichtung ausgestalteten glasbasierten Beschichtung verwendet werden, so dass die Füllstoffe beim Einbrennen der Dekore weiterhin kristallin vorliegen.

Im Gegensatz zu Pigmenten ist der Füllstoff bevorzugt ein Füllstoff, der die Farbe nicht oder wenig beeinflusst, insbesondere kein farbgebendes Pigment.

Vorliegend ist der Füllstoff so ausgestaltet, dass er ein Material mit einer spezifischen molaren Wärmekapazität von höchstens 5 mJ/(mol·K) und bevorzugt einer Wärmeleitfähigkeit von höchstens 12 W/(m·K) umfasst. Mit anderen Worten ist der Füllstoff so ausgebildet, dass er ein Material mit speziellen Stoffeigenschaften hinsichtlich Speicherung und/oder Leitung von thermischer Energie umfasst. Diese Stoffeigenschaften, also die spezifische molare Wärmekapazität und die Wärmeleitfähigkeit, werden im Rahmen der vorliegenden Offenbarung auch vereinfacht als thermische Eigenschaften eines Stoffes bezeichnet.

Eine solche Ausgestaltung ist aus dem Stand der Technik nicht bekannt.

Übliche Füllstoffe umfassen insbesondere relativ kostengünstige Materialien, da sie beispielsweise als Ersatz für die in der Regel wesentlichen teureren Pigmente verwendet werden, oder sie umfassen Materialien, welche beispielsweise eine hohe Kratzfestigkeit aufweisen, wie beispielsweise Füllstoffe aus oder umfassend $Al_2O_3$. Ebenfalls ist es bekannt, $SiO_2$-basierte Füllstoffe zu verwenden, welche beispielsweise zur Einstellung der Rheologie in einem Beschichtungsmittel, wie einer Paste, verwendet werden können. Es ist jedoch bereits nicht bekannt, Füllstoffe basierend auf deren Eigenschaften zur Speicherung und/oder Leitung von thermischer Energie auszuwählen.

Überraschend hat sich gezeigt, dass mit einem Material, welches eine spezifische molare Wärmekapazität von höchstens 5 mJ/(mol·K), vorzugsweise von höchstens 2 mJ/(mol·K) und besonders bevorzugt von höchstens 1 mJ/(mol·K) oder sogar weniger, aufweist, als Bestandteile einer Beschichtung eines Glas- oder Glaskeramikelements eine nochmals weitere Reduktion in der Oberflächentemperatur eines Glas- oder Glaskeramikelements, wie einer Sichtscheibe oder einer Abdeckplatte, möglich ist. Insbesondere kann eine solche Reduktion der Oberflächentemperatur erzielt werden an der der Wärmequelle abgewandten Seite. Oft handelt es sich bei dieser Seite des Glas- oder Glaskeramikelements um die Seite, welche nicht mit der Beschichtung umfassend den Füllstoff versehen ist.

Bevorzugt ist der Füllstoff so ausgestaltet sein, dass er ein Material mit einer Wärmeleitfähigkeit von höchstens 12 W/(m·K), vorzugsweise von höchstens 3 W/(m·K) und besonders bevorzugt von höchstens 2 W/(m·K) aufweist oder umfasst. Es kann dabei besonders bevorzugt sein, wenn das Material des Füllstoffs sowohl eine niedrige Wärmeleitfähigkeit als auch eine niedrige spezifische molare Wärmekapazität, also sowohl eine Wärmeleitfähigkeit von höchstens 12 W/(m·K) als auch eine spezifische molare Wärmekapazität von höchstens 5 mJ/(mol·K), aufweist.

Es hat sich gezeigt, dass mit einem solchen Material die Oberflächentemperatur einer Seite eines Glas- oder Glaskeramikelements besonders effizient abgesenkt werden kann. Dies kann insbesondere dann vorteilhaft sein, um den Gehalt des Füllstoffs in der Beschichtung möglichst gering zu halten. Es hat sich nämlich gezeigt, dass durch den Zusatz des Füllstoffs mit speziellen thermischen Eigenschaften zwar die Oberflächentemperatur positiv beeinflusst, also erniedrigt, werden kann, es aber bei Zusatz zu einer pigmentierten Beschichtung zu einer Verschiebung des Farborts und/oder zu einer Verringerung der Deckkraft der Beschichtung kommen kann.

Auch ist es möglich, dass sich die Oberflächenstruktur einer mit einem solchen Füllstoff versehenen Beschichtung ändert, insbesondere rauer wird. Eine solche raue Oberflächenstruktur und/oder eine Verschiebung des Farborts und/oder eine Verringerung der Deckkraft der Beschichtung sind allerdings nachteilig. Der Farbort und/oder die Opazität der pigmentierten Beschichtung sind nämlich beispielsweise aus Sicherheitsgründen notwendig, beispielsweise um Funktions- oder Gefahrenbereiche eines Geräts oder einer Vorrichtung als solche sicher kennzeichnen zu können. Eine Veränderung der Oberflächenstruktur kann beispielsweise dazu führen, dass die Beschichtung nicht mehr ausreichend kratzfest ist. Auch kann es sein, dass auf diese Weise beispielsweise die Verklebbarkeit der Beschichtung negativ beeinträchtigt. Aus diesen Gründen kann es daher vorteilhaft sein, ein hinsichtlich der Verringerung der Oberflächentemperatur einer Seite des Glaselements besonders effizientes Material als Bestandteil des Füllstoffs zu verwenden, um dessen Gehalt vorteilhaft möglichst gering zu halten.

Im Rahmen der vorliegenden Offenbarung gelten die folgenden Begriffsbestimmungen:
Unter einem Glas- oder Glaskeramiksubstrat wird ein Formkörper aus oder umfassend ein Glas bzw. einer Glaskeramik verstanden.

Unter einem Glas- oder Glaskeramikelement wird ein veredeltes Glas- bzw. Glaskeramikelement verstanden. Unter einer Veredelung wird verstanden, dass das Substrat weiterverarbeitet wurde, insbesondere beschichtet.

Unter einer Hauptfläche eines Glas- oder Glaskeramiksubstrats wird eine Fläche verstanden, welche mindestens 40% der Oberfläche des Formkörpers aus oder umfassend Glas bzw. Glaskeramik ausmacht. Für den Fall einer scheibenförmigen Ausgestaltung des Glas- oder Glaskeramiksubstrats werden die Hauptflächen häufig auch als Seiten bezeichnet, beispielsweise als Oberseite oder Unterseite bzw. Vorderseite oder Rückseite, je nach der genauen räumlichen Orientierung des Glas- oder Glaskeramiksubstrats.

Unter einer scheibenförmigen Ausbildung eines Formkörpers wird ein Formkörper verstanden, bei dem die laterale Abmessung in einer ersten Raumrichtung eines kartesischen Koordinatensystems wenigstens eine Größenordnung geringer ist als in den beiden anderen, zur ersten Raumrichtung senkrechten Raumrichtung. Die erste Raumrichtung kann dabei auch als Dicke verstanden werden, die beiden anderen Raumrichtungen als Länge und Breite. Mit anderen Worten wird unter einem scheibenförmigen Formkörper ein Körper verstanden, bei dem die Dicke wenigstens eine Größenordnung geringer ist als die Länge und die Breite. Länge und Breite können dabei im Wesentlichen ähnlich sein, also in derselben Größenordnung liegen. Ein solcher Formkörper wird auch als Scheibe bezeichnet. Es ist aber auch möglich, dass die Länge des scheibenförmigen Formkörpers ein Vielfaches der Breite beträgt. In diesem Fall kann man auch von einem Band sprechen.

Da, wie vorstehend ausgeführt, das Glas- oder Glaskeramikelement ein veredeltes Glas- oder Glaskeramiksubstrat ist, gelten die Ausführungen für die Länge und Breite sowie für die Hauptflächen bzw. Seiten des Substrats in entsprechender Weise auch für das Element.

Die Dicke des Glas- oder Glaskeramikelements ergibt sich zumindest in den Bereichen des Glas- oder Glaskeramikelements, in denen auf wenigstens einer Seite (oder: Hauptfläche) die Beschichtung oder gegebenenfalls auch eine weitere Beschichtung oder sogar mehrere Beschichtungen angeordnet sind, als Summe der Substratdicke und der Dicke der Beschichtung oder gegebenenfalls der Beschichtungen. Da allerdings die Dicke der Beschichtung oder der Beschichtungen in der Regel wenigstens eine Größenordnung geringer ist als die Dicke des Substrats, kann bei der Angabe der Dicke des Elements näherungsweise die Dicke des Substrats angenommen und die Dicke der Beschichtung oder der Beschichtungen vernachlässigt werden.

Als transparent wird ein Glas- oder Glaskeramiksubstrat vorliegend dann bezeichnet, wenn es einen Lichttransmissionsgrad im sichtbaren Wellenlängenbereich des elektromagnetischen Spektrums (also von 380 nm bis 780 nm) von wenigstens 40 % aufweist.

Unter einem Haushaltsgerät wird ein Gerät verstanden, welches im Haushalt verwendet werden kann, insbesondere in einem Privathaushalt. Hausgeräte werden häufig auch als sogenannte "weiße Ware" bezeichnet. Im Rahmen der vorliegenden Offenbarung werden als Hausgeräte aber nicht ausschließlich Geräte für den Privathaushalt oder den privaten Gebrauch verstanden, sondern auch solche Geräte, wie beispielsweise Backöfen, die auch im industriellen oder gewerblichen Bereich verwendet werden können, beispielsweise also auch Öfen für die gewerbliche oder kommerzielle Anwendung.

Unter einem Heizgerät wird allgemein ein Gerät zur Erzeugung von Wärme verstanden, insbesondere auch zum Beheizen von Räumen. Insbesondere wird unter einem Heizgerät ein Ofen, beispielsweise ein Kaminofen, verstanden.

Sofern im Rahmen der vorliegenden Offenbarung ausgeführt wird, dass ein Erzeugnis oder ein Material ein anderes Material umfasst, wird insbesondere auch verstanden, dass das betreffende Erzeugnis oder Material überwiegend, also zu mehr als 50 Gew.-%, oder im Wesentlichen, also zu mehr als 90 Gew.-%, oder bis auf unvermeidlich Verunreinigungen, sogar vollständig, aus diesem anderen Material bestehen kann.

Unter dem Äquivalentdurchmesser eines Partikels wird der volumenäquivalente Kugeldurchmesser verstanden. Sofern im Rahmen der vorliegenden Offenbarung eine Partikelgröße angegeben wird, bezieht sich diese Angabe, sofern nicht ausdrücklich anders ausgeführt, auf den $d_{50}$-Wert der Partikelverteilung, bezogen auf den Äquivalentdurchmesser.

Unter einer Beschichtung wird im Rahmen der vorliegenden Offenbarung eine Materiallage verstanden, welche sich von der Zusammensetzung des Substrats, auf welchem sie angeordnet ist, zumindest teilweise unterscheidet. Unter einer Beschichtung wird dabei insbesondere auch ein Oberflächenbereich verstanden, der eine oberflächliche Eindiffusion der Beschichtung in oberflächennahe Bereiche des Substrates umfasst. Die Beschichtung kann somit auch Diffusionsschichten an der Grenze zwischen Beschichtung und Substrat umfassen. Weiterhin kann an der Grenzfläche zwischen Beschichtung und Substrat auch die Ausbildung einer sogenannten Anschmelz-Reaktionszone erfolgt sein. Die Beschichtung nach der vorliegenden Offenbarung ist insbesondere durch einen Beschichtungsprozess erhalten, also durch Aufbringen eines Beschichtungsmaterials, beispielsweise einer Paste, auf eine Unterlage, hier also das Substrat. Bei dem Beschichtungsprozess kann es sich insbesondere um eine Flüssigbeschichtungsverfahren, wie Tauchen, Fluten, Spin-Coating/Schleudern oder Rakeln handeln. Besonders bevorzugt umfasst der Beschichtungsprozess einen Druckvorgang, beispielsweise Siebdruck.

Die Beschichtung nach der vorliegenden Offenbarung weist einen Feststoffanteil auf. Unter dem Feststoffanteil wird der Anteil der Beschichtung an festen Bestandteilen verstanden. Bei einer Partikel umfassenden Beschichtung, wie beispielsweise einer pigmentierten Beschichtung, die in der Regel durch den Auftrag eines flüssigen Beschichtungsmittels, beispielsweise einer Paste, auf ein Substrat erfolgt, sowie durch eine anschließende thermische Behandlung, die auch als Einbrand bezeichnet werden kann, wird der Feststoffanteil durch die festen Bestandteile des Beschichtungsmittels, nämlich dem oder den Pigmenten und dem oder den Füllstoffen sowie ggf. dem oder den Bindemitteln gebildet. Flüssige oder flüchtige Bestandteile eines Beschichtungsmittels, beispielsweise einer "Farbe" oder "Druckfarbe" oder einer Paste, zählen also nicht zum Feststoffanteil. Insbesondere zählen Lösungsmittel oder Lösungsmittelgemische, wie Siebdruckmedien oder Siebdrucköle, nicht zum Feststoffanteil der Beschichtung.

Es hat sich gezeigt, dass eine Reduktion der Oberflächentemperatur einer Seite eines Glas- oder Glaskeramikelements möglich ist, indem einer pigmentierten Beschichtung ein Füllstoff umfassend Zirkoniumoxid und/oder Hafniumoxid und/oder ein Oxid eines Seltenerdelements zugesetzt werden kann.

Gemäß einem weiteren Aspekt der vorliegenden Offenbarung betrifft diese daher auch ein Glas- oder Glaskeramikelement für Haushalts- und/oder Heizgeräte umfassend ein transparentes Glas- oder Glaskeramiksubstrat und eine auf wenigstens einer Hauptfläche des Glas- oder Glaskeramiksubstrats zumindest bereichsweise angeordnete Beschichtung, wobei die Beschichtung eine glasbasierte Beschichtung, vorzugsweise eine Emaillebeschichtung, ist, und wenigstens ein Pigment und wenigstens einen Füllstoff umfasst, wobei der Füllstoff Zirkoniumoxid und/oder Hafniumoxid und/oder ein Chalkogenid, insbesondere ein Oxid, eines Seltenerdelements ist oder umfasst.

Als Chalkogenide werden im Rahmen der vorliegenden Offenbarung die Verbindungen der Elemente der sechsten Hauptgruppe (nach Mendelejew) des Periodensystems der Elemente (bzw. der 16. Gruppe der IUPAC Gruppen des Periodensystems der Elemente) bezeichnet, wobei die Chalkogenide insbesondere umfassen Oxide, Sulfide und Selenide und Mischungen hiervon.

Zu den Seltenerdelementen werden im Rahmen der vorliegenden Offenbarung die chemischen Elemente der 3. Nebengruppe des Periodensystems der Elemente sowie die Lanthanoide gezählt.

Bei einer solchen Ausgestaltung des Glas- oder Glaskeramikelements mit einer pigmentierten oder allgemeiner einer Partikel umfassenden Beschichtung kann insbesondere eine vorteilhafte Reduktion der Oberflächentemperatur einer Seite des Glas- oder Glaskeramikelements bewirkt werden.

Dabei ist es möglich, dass der Füllstoff beispielsweise als Gemisch oder als Verbindung der genannten Oxide ausgestaltet ist. Es hat sich nämlich gezeigt, dass gerade diese Oxide vorteilhafte thermische Eigenschaften aufweisen, welche zu der gewünschten Reduktion der Oberflächentemperatur des Elements in Heißanwendungen, also beispielsweise als Abdeckplatte oder Sichtscheibe, führen.

Gemäß einer Ausführungsform ist der Füllstoff so ausgebildet, dass er ein Mischoxid umfassend ein Oxid wenigstens eines Seltenerdelement sowie Zirkoniumoxid und/oder Hafniumoxid ist oder umfasst. Beispielsweise kann der Füllstoff als $La_2Zr_2O_7$ umfassen oder aus $La_2Zr_2O_7$ ausgebildet sein. Der Füllstoff kann weiterhin $Nd_2Zr_2O_7$ und/oder $(Nd, Fe)_2Zr_2O_7$ umfassen oder aus $Nd_2Zr_2O_7$ oder $(Nd, Fe)_2Zr_2O_7$ ausgebildet sein.

Allgemein, ohne Beschränkung auf die vorstehend beschriebenen konkreten Beispiele von Füllstoffen kann der Füllstoff ausgebildet sein als oder umfassen $ZrO_2$. Insbesondere kann der Füllstoff kubisch stabilisiertes $ZrO_2$ sein oder umfassen. Beispielsweise kann der Füllstoff $HfO_2$ umfassendes, kubisches stabilisiertes $ZrO_2$ sein oder umfassen.

Alternativ oder zusätzlich kann der Füllstoff ein Chalkogenid, insbesondere ein Oxid, gemäß der folgenden Formel sein oder umfassen:

$$A_{2+X}B_YD_ZE_7,$$

wobei A wenigstens ein Element aus der Gruppe der Seltenen Erden ist und als dreiwertiges Kation vorliegt, B wenigstens ein Element ist, welches als vierwertiges Kation vorliegt, D wenigstens ein Element ist, welches als fünfwertiges Kation vorliegt, und E wenigstens ein Element ist, welches als zweiwertiges Anion vorliegt, und wobei gilt:

$$0 \leq X \leq 1{,}1,$$

$$0 \leq Y \leq 3,$$

$$0 \leq Z \leq 1{,}6,$$

und wobei weiterhin gilt:

$$8 \leq 3X + 4Y + 5Z \leq 15.$$

Bevorzugt ist der Füllstoff als kristallines Material ausgebildet.

Bevorzugt gilt:
$0 \leq X \leq 1{,}0$, besonders bevorzugt $0 \leq X \leq 0{,}5$, ganz besonders bevorzugt $0 \leq X \leq 0{,}25$ und am meisten bevorzugt $0 \leq X \leq 0{,}1$.

Bevorzugt ist A ausgewählt aus der Gruppe umfassend oder bestehend aus Y, La, Nd, Gd, Dy, Yb, Lu, Sc, La und Mischungen hiervon. Besonders bevorzugt ist A ausgewählt aus der Gruppe umfassend oder bestehend aus Y, La, Nd, Gd, Dy, Yb, Lu, Sc und Mischungen hiervon. Ganz besonders bevorzugt ist A ausgewählt aus der Gruppe umfassend oder bestehend aus La, Dy, Nd, Yb und Mischungen hiervon. Am meisten bevorzugt ist A ausgewählt aus der Gruppe umfassend oder bestehend aus La, Nd und Mischungen hiervon. Insbesondere kann A auch lediglich von einem der vorgenannten Elemente gebildet werden, also beispielsweise lediglich Y oder La oder Nd sein.

B ist bevorzugt ausgewählt aus der Gruppe umfassend oder bestehend aus Zr, Ti, Hf, Sn, Ge und/oder Mischungen hiervon. Besonders bevorzugt ist B ausgewählt aus der Gruppe umfassend oder bestehend aus Zr, Ti, Hf, und Mischungen hiervon. Gemäß einer Ausführungsform ist B ausgewählt aus der Gruppe umfassend oder bestehend aus Zr, Hf und Mischungen hiervon.

Gemäß einer weiteren Ausführungsform ist B ausgewählt aus der Gruppe umfassend oder bestehend aus Ti, Hf und Mischungen hiervon. Insbesondere kann B auch lediglich von einem der vorgenannten Elemente gebildet werden, also beispielsweise lediglich Zr oder Ti sein.

D ist bevorzugt ausgewählt aus der Gruppe umfassend oder bestehend aus Nb, Ta und Mischungen hiervon. Insbesondere kann D auch lediglich eines dieser Elemente sein, also beispielsweise Nb oder Ta.

E ist bevorzugt ausgewählt aus der Gruppe der Chalkogene, also Elementen der sechsten Hauptgruppe (nach Mendelejew) des Periodensystems der Elemente (entspricht IUPAC-Gruppe 16). E kann insbesondere auch Mischungen unterschiedlicher Chalkogene umfassen. Bevorzugt ist E ausgewählt aus der Gruppe umfassend oder bestehend aus Selen Se, Sauerstoff O, Schwefel S und Mischungen hiervon. Besonders bevorzugt ist E ausgewählt aus der Gruppe umfassend oder bestehend aus O, S und Mischungen hiervon. Ganz besonders bevorzugt ist E O (Sauerstoff).

Besonders bevorzugt sind allgemein solche Füllstoffe, deren Einzelkörner symmetrische, vorzugsweise kubische Strukturen aufweisen. Gemeint sind solche kubischen Strukturen, die jenen der Minerale Pyrochlor oder Fluorit analog sind.

Beispielhafte Zusammensetzungen von Füllstoffen finden sich auch in der folgenden Tabelle, wobei die Mengen jeweils in Mol.-% angeben sind:

*Tabelle 2*

| mol% | $Nd_2O_3$ | $Y_2O_3$ | $Gd_2O_3$ | $Yb_2O_3$ | $Dy_2O_3$ | $ZrO_2$ | $Fe_2O_3$ |
|------|-----------|----------|-----------|-----------|-----------|---------|-----------|
| PC1  |           |          |           |           |           | 100     |           |
| PC2  | 33,33     |          |           |           |           | 66,66   |           |
| PC3  | 33,33     |          |           |           |           | 44,44   | 22,22     |
| PC4  |           | 33,33    |           |           |           | 66,66   |           |
| PC5  |           | 33,33    |           |           |           | 44,44   | 22,22     |
| PC6  | 38        |          |           |           |           | 62      |           |
| PC7  |           | 38       |           |           |           | 62      |           |
| PC8  | 26        |          |           |           |           | 74      |           |
| PC9  |           | 26       |           |           |           | 74      |           |
| PC10 |           |          | 38        |           |           | 62      |           |
| PC11 |           |          | 26        |           |           | 74      |           |
| PC12 |           |          |           | 38        |           | 62      |           |
| PC13 |           |          |           | 26        |           | 74      |           |
| PC14 |           |          |           |           | 33,33     | 66,66   |           |
| PC15 |           |          |           |           | 33,33     | 44,44   | 22,22     |
| PC16 |           |          |           |           | 38        | 62      |           |
| PC17 |           |          |           |           | 26        | 74      |           |

Sofern es Abweichungen der Summe von 100% gibt, sind diese rundungstechnisch bedingt.

Solche Füllstoffe mit einer Zusammensetzung wie vorstehend ausgeführt sind allgemein ganz besonders vorteilhaft. Zum einen handelt es sich hierbei um Zusammensetzungen, die im entsprechenden Phasendiagramm an der Stelle des Mischungsdomes liegen, sodass auf diese Weise vorzugsweise eine besonders homogene, bevorzugt auch sehr stabile, Kristallphase erhältlich ist.

Weiterhin ist eine solche Zusammensetzung vorteilhaft, weil ein solcher Füllstoff, der als Pulver zu der Paste und damit zur resultierenden Beschichtung hinzugegeben wird, nahe der Zusammensetzung sogenannter "thermal barrier oxides" oder TBO ist, also Stoffen, die beispielsweise in sogenannten "thermal barrier coatings" oder Wärmedämmschichten eingesetzt werden. Überraschend ist aber, dass der Effekt der Reduktion der Oberflächentemperatur hier bereits bei sehr niedrigen Temperaturen von beispielsweise nur 250°C (anstatt bei mehrere 100 Grad oder bei über 1000°C) oder sogar weniger auftritt, und zwar auch dann, wenn diese Füllstoffe nicht in Form einer Wärmedämmschicht vorliegen, sondern beispielsweise auch eingebettet in eine Beschichtungsmatrix, beispielsweise eine Glasmatrix einer Emaillebeschichtung. Insbesondere scheint diese Wirkung überraschenderweise daran zu liegen, dass die hier betrachteten Füllstoffe hier Wärmestrahlung reflektieren, ein Effekt, der für klassische Wärmedämmschichten gar nicht relevant ist.

Gemäß einer Ausführungsform ist die Beschichtung eine glasbasierte Beschichtung, vorzugsweise eine Emaillebeschichtung.

Unter einer glasbasierten Beschichtung wird verstanden, dass das Bindemittel der Beschichtung ein amorphes, im Wesentlichen, als zu mehr als 90 Gew.-%, anorganisches Material ist oder umfasst. Insbesondere ist es auch möglich, dass das Bindemittel vollständig anorganisch ausgebildet ist. Anorganische Bindemittel verfügen über eine hohe Temperaturbeständigkeit und sind daher gerade für Heißanwendungen vorteilhaft. Eine amorphe Ausbildung des Bindemittels ist insbesondere vorteilhaft, um eine glatte, gleichmäßige Beschichtung zu erhalten. Dies erhöht vorteilhaft die Verschleißbeständigkeit der Beschichtung, beispielsweise die Kratzfestigkeit und/oder die Abriebfestigkeit.

Vorzugsweise ist die glasbasierte Beschichtung eine Emaillebeschichtung. Unter einer Emaillebeschichtung wird im Rahmen der vorliegenden Offenbarung eine Beschichtung umfassend ein Bindemittel umfassend einen Glasbestandteil, insbesondere einen sogenannten Glasfluss oder eine Glasfritte, verstanden. Glasfluss oder Glasfritte sind hierbei glasige Materialien, welche als Bindemittel-Vorläuferphase in Partikelform vorliegen, beispielsweise also zunächst als Glaspulver vorliegen und auch in Pulverform einem Beschichtungsmittel, wie einer Paste, zugegeben werden können. Aus der Bindemittel-Vorläuferphase bildet sich in der Beschichtung das Bindemittel. Für solche glasbasierten Beschichtungen, insbesondere für Emaillebeschichtung, kann das Bindemittel auch als Glasmatrix bezeichnet werden. Insbesondere kann die Emaillebeschichtung so ausgebildet sein, dass der Glasbestandteil beim Erwärmen der Beschichtung, also in einem sogenannten Brand oder Einbrand, zumindest teilweise aufschmilzt und auf diese Weise die festen Bestandteile der Beschichtung, also das wenigstens eine Pigment und den wenigstens einen Füllstoff, miteinander und mit dem Substrat verbindet. Insbesondere kann der glasige Bestandteil auch vollständig aufschmelzen. Eine Ausgestaltung der Beschichtung als Emaillebeschichtung (oder auch kurz Emaille) führt zu besonders haft- und verschleißfesten Beschichtungen und ist daher besonders bevorzugt.

Um eine gute Verarbeitbarkeit einer solchen Emaillebeschichtung zu gewährleisten, ist beispielsweis die Erweichungstemperatur ($T_{EW, Glaspulver}$) des Glases relevant, da für das Glattfließen, d.h. zur Herstellung der Beschichtung aus der aufgetragenen Paste, die Einbrandtemperatur mindestens der Erweichungstemperatur EW des Glaspulvers entsprechen muss. Die Erweichungstemperatur EW ist die Temperatur bei der die Viskosität des Glases $10^{7,6}$ dPas beträgt. Abhängig von der Geometrie des Glaselements bzw. -substrats und dem Erwärmungsprozess werden Verformungen beispielsweise bei Substraten aus Glas bereits deutlich unter deren EW beobachtet. Das Glattfließen der Glaskomponente zu einer Schicht ist vorteilhaft, um die geforderten chemischen, physikalischen, mechanischen und optischen Eigenschaften zu gewährleisten. Auch für die Fixierung des oder der zugesetzten Pigmente und dem wenigstens einen Füllstoff ist das Glattfließen von Vorteil.

Unter einer Bindemittel-Vorläuferphase wird im Rahmen der vorliegenden Offenbarung eine Phase verstanden, welche sich beim Aushärten des auf das Substrat aufgebrachten Nassfilms in das Bindemittel umwandelt. Insbesondere kann darunter ein Glaspulver verstanden werden, welches bei einem Einbrand aufschmilzt, und beim Aufschmelzen einen Glasfluss oder eine Glasfritte bzw. eine Glasmatrix ausbildet.

Gemäß einer Ausführungsform ist der Glasbestandteil des Bindemittels als Glasfluss oder Glasfritte ausgebildet und umfasst Zinkoxid und/oder Bismutoxid. Als besonders vorteilhaft haben sich hierbei Glasfritten mit einem Gehalt an Zinkoxid im Bereich von 0,1 bis 70 Gew.-% und insbesondere einen Zinkoxidgehalt im Bereich von 0,1 bis 30 Gew.-% erwiesen. Alternativ oder zusätzlich enthält die Glasfritte 0,1 bis 75 Gew.-% und insbesondere 8 bis 75 Gew.-% Bismutoxid. Der Gehalt an Zinkoxid bzw. Bismutoxid in den oben beschriebenen Ausführungsformen wirkt sich dabei insbesondere vorteilhaft auf die Erweichungstemperatur des Glases aus. Gemäß einer Weiterbildung dieser Ausführungsformen weisen die Glasfritten Erweichungstemperaturen im Bereich von 500 bis 950 °C. Bevorzugt ist die Erweichungstemperatur kleiner als 800 °C, oder sogar kleiner als 750 °C und besonders bevorzugt kleiner als 680 °C, jedoch mehr als 450°C auf. Durch die niedrigen Erweichungstemperaturen erfolgt bereits bei geringen Einbrandtemperaturen die Ausbildung einer homogenen Glasmatrix aus dem Glaspulver. Somit können Glas- oder Glaskeramiksubstrate mit unterschiedlichen Zusammensetzungen (und somit unterschiedlichen Erweichungstemperaturen) mit der Paste beschichtet werden, ohne dass beim Einbrand die Viskosität des zu beschichtenden Glas- oder Glaskeramiksubstrats bzw. des resultierenden Glas- oder Glaskeramikelements erniedrigt wird.

Zudem wird durch den Gehalt an Bismutoxid im Glas die chemische Resistenz der entsprechenden, d.h. der mit der Paste hergestellten, Beschichtung erhöht.

Da die Glasmatrix in der Beschichtung des beschichteten Substrates (bzw. des Elements) die gleiche Zusammensetzung wie das Glaspulver in der Paste aufweist, gelten die Angaben bezüglich der Zusammensetzung des Glaspulvers entsprechend auch für die Zusammensetzung der Glasmatrix in der Beschichtung in einigen Ausführungsformen bzw. Weiterbildungen. Die Glasmatrix kann hierbei auch als Bindemittel oder Bindemittelphase der Beschichtung verstanden werden.

Gemäß einer Weiterbildung der Erfindung weist das Glaspulver in der Paste bzw. die Glasmatrix der entsprechenden Beschichtung folgende Zusammensetzung in Gew.-% auf:

| | |
|---|---|
| SiO$_2$ | 30-75, bevorzugt 44-75 |
| Al$_2$O$_3$ | 0-25, bevorzugt 0,2-25, besonders bevorzugt 2-25 |
| B$_2$O$_3$ | 0-30, bevorzugt 1-30, besonders bevorzugt 5-30 |
| Li$_2$O | 0-12 |
| Na$_2$O | 0-25, bevorzugt 0-15 |
| CaO | 0-12 |
| MgO | 0-9 |
| BaO | 0-27 |
| SrO | 0-4 |
| ZnO | 0-35, bevorzugt 0-20 |
| Bi$_2$O$_3$ | 0-5 |
| TiO$_2$ | 0-10, bevorzugt 0-5 |
| ZrO$_2$ | 0-7 |
| As$_2$O$_3$ | 0-1 |
| Sb$_2$O$_3$ | 0-1,5 |
| F | 0-3 |
| Cl | 0-1, bevorzugt bis auf unvermeidliche Spuren frei von Cl |
| H$_2$O | 0-3. |

Bevorzugt weist das Glas einen Mindestgehalt an Al$_2$O$_3$ von 0,2 Gew.-%, bevorzugt von mindestens 2 Gew.-% auf. Alternativ oder zusätzlich weist das Glas einen Gehalt von B$_2$O$_3$ von zumindest 1 Gew.-%, bevorzugt mindestens 5 Gew.-% auf.

Es hat sich weiterhin als vorteilhaft herausgestellt, wenn das Glas mindestens 1 Gew.-% eines Alkalioxides, ausgewählt aus der Gruppe von Na$_2$O, Li$_2$O und K$_2$O oder Mischungen dieser Oxide enthält.

Alternativ oder zusätzlich umfasst das Glas mindestens 1 Gew.-% eines weiteren Oxids oder einer Mischung von Oxiden, ausgewählt aus der Gruppe von CaO, MgO, BaO, SrO, ZnO, ZrO$_2$, und TiO$_2$.

Gemäß einer anderen Weiterbildung weist das Glas folgende Zusammensetzung in Gew.-% auf:

| | |
|---|---|
| SiO$_2$ | 6-65, bevorzugt 10-65, besonders bevorzugt 15-65 |
| Al$_2$O$_3$ | 0-20 |
| B$_2$O$_3$ | 0-40, bevorzugt 1-30, besonders bevorzugt 3-30 |
| Li$_2$O | 0-12 |
| Na$_2$O | 0-18 |
| K$_2$O | 0-17 |
| CaO | 0-17 |
| MgO | 0-12 |
| BaO | 0-38 |
| SrO | 0-16 |
| ZnO | 0-70 |
| TiO$_2$ | 0-5 |
| ZrO$_2$ | 0-5 |
| Bi$_2$O$_3$ | 0-75, bevorzugt 0-60, bevorzugt 5-60, besonders bevorzugt 10-60 |
| CoO | 0-5 |
| Fe$_2$O$_3$ | 0-5 |
| MnO | 0-10 |
| CeO$_2$ | 0-3 |
| F | 0-3 |
| Cl | 0-1 |
| H$_2$O | 0-3. |

In einer bevorzugten Ausführungsform der Weiterbildung weist das Glas einen Mindestgehalt an SiO$_2$ von 10

Gew.-%, bevorzugt von mindestens 15 Gew.-% auf. Alternativ oder zusätzlich weist das Glas einen Mindestgehalt an $Bi_2O_3$ von 5 Gew.-%, bevorzugt von mindestens 10 Gew.-% auf. Alternativ oder zusätzlich enthält das Glas zumindest 1 Gew.-%, bevorzugt zumindest 3 Gew.-% $B_2O_3$. Vorzugsweise beträgt der Gesamtgehalt der Alkalioxide $Na_2O$, $Li_2O$ und $K_2O$ zumindest 1 Gew.-%.

Das in der Paste enthaltene Glas bzw. die Glasmatrix in der entsprechenden Beschichtung kann insbesondere ein alkalifreies Glas, ein alkalihaltiges Glas, ein Silikatglas, ein Borosilikatglas, ein Zinksilikatglas, ein Zinkboratglas, ein Zinkborsilikatglas, ein Bismutborsilikatglas, ein Bismutboratglas, ein Bismutsilikatglas, ein Phosphatglas, ein Zinkphosphatglas, ein Aluminosilikatglas oder ein Lithiumaluminosilikatglas sein. Gemäß einer Ausführungsform der Erfindung weist die Paste Glaspulver mit unterschiedlichen Glaszusammensetzungen auf.

Gemäß einer Ausführungsform ist der Gehalt der toxikologisch bedenklichen Komponenten Blei, Cadmium, Quecksilber und/oder Chrom(VII)-Verbindungen im Glas kleiner 500 ppm.

Gemäß einer weiteren Ausführungsform ist das Pigment als Absorptionspigment ausgestaltet. Mit anderen Worten handelt es sich also um ein Pigment, welches durch Absorption färbt. Es steht damit im Gegensatz zu sogenannten Effektpigmenten, welche einem Material oder einer Beschichtung insbesondere eine bestimmte optische Anmutung (beispielsweise einen sogenannten Metallic-Effekt) verleihen, und den Weißpigmenten, welche nicht durch Absorption im Sichtbaren färben, sondern im Wesentlichen durch Streueffekte eine weiße Färbung (oder ggf. in einer Pigmentmischung ein Aufhellen) verursachen.

Bevorzugt ist das Pigment als Absorptionspigment ausgestaltet und weist eine schwarze oder schwarz-braune-Färbung auf. Beispielsweise kann das Pigment als IR-reflektierendes Absorptionspigment ausgestaltet sein. Insbesondere kann das IR-reflektierende Pigment ausgewählt sein aus der Gruppe der Pigmente Cl Brown 29, Cl Green 17 und Cl Black 7. In der folgenden Tabelle sind geeignete IR-reflektierende Pigmente 1 bis 4 aufgeführt. Pigment 5 ist ein nicht IR-reflektierendes Absorptionspigment. Ein nicht-reflektierendes Absorptionspigment kann beispielsweise auch sein ein Kupfer-Chromit-Spinell-Schwarz (Cl Pigment Black 28).

*Tabelle 3*

| Pigment | | Zusammensetzung | Dichte | BET | mittlere Größe ($d_{50}$) | TSR |
|---------|---|---|---|---|---|---|
| Nr. | Color Code | | [g/cm$^3$] | [m$^2$/g] | [μm] | [%] |
| 1 | Cl Brown 29-1 | Chrom Iron Oxide | 5,2 | 1,9 | 1,1-1,6 | 25 |
| 2 | Cl Brown 29-2 | Chrom Iron Oxide | 5,4 | 2,9 | 0,97-1,2 | 27 |
| 3 | Cl Green 17 | Chromium Green-Black Hematite | 5,2 | 2,7 | 1,1-1,4 | 25 |
| 4 | Cl Brown 29-3 | Chrom Iron Oxide | 5,1 | 3 | 1,11-1,3 | 29 |
| 5 | Cl Black 30 | Chrome Iron Nickel Black Spinel | 5,3 | 3 | 1,1 | 13 |

Eine Ausgestaltung des Pigments als Absorptionspigment ist gerade in Heißanwendungen vorteilhaft. Denn zum einen kann durch die Ausgestaltung des Pigments als Absorptionspigment die durch das Pigment hervorgerufene Deckkraft und Färbung zumindest teilweise entkoppelt von der Korngröße werden. Dies ist beispielsweise bei Weißpigmenten anders, bei denen die Korngröße ein wesentlicher Faktor zur Erzielung einer Streuwirkung und damit einer ausreichenden Deckkraft ist. Hier kann es gerade bei Weißpigmenten zu einem Zielkonflikt kommen zwischen einer ausreichenden Streuung (und mithin weißen Färbung) einer Beschichtung im Bereich des sichtbaren Lichts und einer ausreichenden Streuung und mithin auch Reflexionswirkung im Bereich der Wärmestrahlung. Dies führt dazu, dass bei Absorptionspigmenten die Korngröße insbesondere unter anderen Gesichtspunkten ausgewählt werden kann und insbesondere Aspekte wie die Verarbeitbarkeit und die Beeinflussung der Rheologie durch die Partikelgröße mit bei der Korngrößenauswahl berücksichtigt werden können. Auch können auf diese Weise noch übliche Schichtdicken für eine Beschichtung auf einem Glassubstrat bzw. Glaselement bei einer ausreichenden Deckkraft der Beschichtung realisiert werden. Dies ist ebenfalls gerade für Heißanwendungen vorteilhaft, denn auf diese Weise ist nicht nur eine eindeutige Kennzeichnung beispielsweise von Funktionsbereichen eines mit einem solchen Glaselement ausgerüsteten Geräts möglich, sondern es ist auch möglich, trotz einer Beschichtung eine ausreichende mechanische Festigkeit des Glaselements zu gewährleisten, auch wenn das Glaselement betrieblich thermomechanischen Spannungen ausgesetzt ist. Denn es ist bekannt, dass die mechanische Festigkeit eines Glaselements in der Regel abnimmt, je höher die Dicke einer Beschichtung ist. Dies trifft insbesondere auf besonders haftfeste Beschichtungen, insbesondere glasbasierte Beschichtungen, und ganz besonders für Emaillebeschichtungen zu. Letztere sind in der Regel über eine Anschmelz-Reaktionszone mit der Substratoberfläche besonders gut verbunden, können damit aber gerade dadurch die mechanische Festigkeit gegebenenfalls besonders stark beeinträchtigen.

Gemäß einer weiteren Ausführungsform umfasst das Pigment Pigmentpartikel mit einer Größenverteilung mit

einem $d_{50}$-Wert des Äquivalentdurchmessers im Bereich zwischen 0,15 $\mu$m bis 2 $\mu$m, bevorzugt im Bereich von 0,5 $\mu$m bis 1,8 $\mu$m, beispielsweise im Bereich von 0,8 $\mu$m bis 1,8 $\mu$m. Auf diese Weise wird eine gute Verarbeitbarkeit der Paste sichergestellt. Weiterhin kann damit auch eine gute Auflösung bei einem lateral strukturierten Auftrag der Beschichtung auf wenigstens eine Seite (oder Hauptfläche) des Glassubstrats erzielt werden.

Unter einem lateral strukturierten Auftrag wird hierbei verstanden, dass wenigstens ein Bereich einer Hauptfläche des Substrats bzw. des Elements keine Beschichtung aufweist, wohingegen ein anderer Bereich die Beschichtung aufweist bzw. mit ihr versehen ist. Dabei ist es ganz allgemein möglich, dass die Beschichtung in der Form aufgetragen ist, dass mehrere Bereiche vorliegen, die keine Beschichtung aufweisen, und/oder mehrere Bereiche vorliegen, die beschichtet sind, beispielsweise in Form eines Punktrasters.

Die geringe Partikelgröße ermöglicht nämlich einen Auftrag der Paste auch mit engmaschigen Sieben, beispielsweise mit Sieben mit einer Fadenzahl von 77 Fäden/cm oder sogar 100 oder mehr, beispielsweise 120, Fäden/cm, so dass mit der Paste Beschichtungen bzw. Dekore mit hoher graphischer Auflösung mittels Siebdruck erzeugt werden können. In der nachfolgenden Tabelle sind beispielhaft, jedoch nicht beschränkend, einige geeignete Siebe aufgeführt.

*Tabelle 4*

| Siebbezeichnung im Text | Fadenzahl ($cm^{-1}$) | Garndurchmesser nominal ($\mu$m) | Maschenweite ($\mu$m) |
|---|---|---|---|
| 77T | 77 | 55 | 67 |
| 90T | 90 | 48 | 55 |
| 100T | 100 | 40 | 37 |

Zudem bestimmt die Maschenweite des verwendeten Siebes zusammen mit dem von der Paste umfassten Ölanteil und den Pulverdichten der von der Paste umfassten Pulver die Schichtdicke der Beschichtung nach dem Einbrand.

Insbesondere ist es gemäß einer weiteren Ausführungsform möglich, dass das Pigment Pigmentpartikel mit einer spezifischen Oberfläche im Bereich von 1,1 $m^2$/g bis 8 $m^2$/g, bevorzugt im Bereich von 1,8 $m^2$/g bis 4,5 $m^2$/g, aufweist. Mit anderen Worten weisen die Pigmentpartikel keine besonders große Oberfläche, bezogen auf das Gewicht, auf, wie dies beispielsweise bei bestimmten Füllstoffpartikeln der Fall sein kann. Damit beeinflussen diese Pigmentpartikel die Rheologie einer Paste in der Regel nur sehr wenig. Weiterhin wird dadurch auch der Verbrauch von Bindemittel optimiert. Denn das Bindemittel sollte ausreichen, um die von der Beschichtung umfassten Partikel, insbesondere die Pigmentpartikel, einzubinden, beispielsweise durch ein möglichst vollständiges Umhüllen der Partikel bzw. von deren Oberfläche. Daher steigt der Bedarf an Bindemittel und ggf. auch an flüssigen Bestandteilen der Paste in der Regel mit der Oberfläche der von der Beschichtung bzw. einem Beschichtungsmittel, wie einer Paste, umfassten Partikel. Gleichzeitig sollte aber die Oberfläche der Partikel auch nicht zu gering sein, um einen ausreichenden Kontakt zwischen dem Bindemittel und dem oder den Partikeln zu gewährleisten, was die Einbindung der Partikel in die Beschichtung und mithin deren mechanischen Beständigkeit verbessern kann.

Es ist weiterhin auch möglich und kann sogar bevorzugt sein, dass die Beschichtung ein weiteres Pigment umfasst. Insbesondere kann das weitere Pigment ein IR-reflektierendes Pigment sein.

Gemäß Ausführungsformen kann es also möglich sein, dass die Beschichtung zwei IR-reflektierende Pigmente umfasst, aber es ist auch möglich, dass keines der Pigmente IR-reflektierend ausgestaltet ist oder lediglich eines IR-reflektierend ist. Durch das zweite Pigment kann insbesondere der Farbort der Beschichtung eingestellt werden. Bevorzugt enthält die Beschichtung als zweites Pigment ein IR-reflektierendes Pigment, insbesondere einen Cobaltchromitspinell, ein Indiummanganyttriumoxid, ein Niobiumschwefelzinnoxid, ein Zinnzinktitanat und/oder einen Cobalttitanatspinell. Als besonders vorteilhaft hat sich die Verwendung eines der Pigmente aus der Gruppe mit den Elementen CI Pigment Blue 36, CI Pigment Blue 86, CI Pigment Yellow 227, CI Pigment Yellow 216, CI Pigment Green 26 und CI Pigment Green 50 herausgestellt.

Gemäß einer Ausführungsform beträgt das Volumen-Verhältnis zwischen dem Volumen des zweiten Pigments zum Volumen des ersten Pigments 0,03 bis 0,6, bevorzugt 0,05 bis 0,56 und besonders bevorzugt 0,14 bis 0,47.

Gemäß einer weiteren Ausführungsform umfasst der Füllstoff Füllstoffpartikel mit einer Größenverteilung mit einem $d_{50}$-Wert des Äquivalentdurchmessers zwischen 0,15 $\mu$m und 25 $\mu$m. Es hat sich gezeigt, dass eine solche Ausgestaltung des Füllstoffs bzw. der Beschichtung bzw. der entsprechenden Paste besonders vorteilhaft ist. Insbesondere hat sich gezeigt, dass zur Erzielung einer möglichst geringen Oberflächentemperatur an einem mit einer Beschichtung nach Ausführungsformen versehenen Glas- oder Glaskeramikelement insbesondere eine bestimmte Mindestpartikelgröße nicht unterschritten werden sollte. Vorzugsweise liegt die Partikelgröße der Füllstoffpartikel zwischen 0,15 $\mu$m und 25 $\mu$m, besonders bevorzugt zwischen 0,2 $\mu$m und 25 $\mu$m, besonders bevorzugt zwischen 0,5 $\mu$m und 5 $\mu$m.

Die Ursache hierfür ist nicht vollkommen verstanden. Die Erfinder vermuten, dass eine bestimmte Mindestpartikelgröße notwendig sein könnte, dass die vorteilhaften thermischen Eigenschaften des Füllstoffs überhaupt zum Tragen kommen. Dies könnte beispielsweise daran liegen, dass es sich bei den thermischen Eigenschaften, insbesondere bei der Wärmekapazität, um Materialeigenschaften handelt, welche auch durch die Anordnung der Atome bzw. Ionen und die damit resultierenden Freiheitsgrade im Gitter des Festkörpers beeinflusst werden können. Bei Nanopartikeln mit großer spezifischer Oberfläche, bei denen die Oberflächeneigenschaften entsprechend stärker zum Tragen kommen als Volumeneffekte, könnte hier ein im Hinblick auf die vorliegend adressierte Wirkung der Temperaturreduktion eines beschichteten Glas- oder Glaskeramikelements negativer Effekt hinsichtlich der resultierenden Schwingungsfreiheitsgrade resultieren. Daher sollte die Partikelgröße der Füllstoffpartikel, bezogen den $d_{50}$-Wert der Größenverteilung des Äquivalentdurchmessers, nicht zu gering sein und beträgt gemäß einer Ausführungsform mindestens 0,2 $\mu$m, bevorzugt mindestens 0,8 $\mu$m.

Zur Erzielung einer guten Auflösung beispielsweise bei einem Auftrag der Beschichtung in einem Siebdruckverfahren und/oder für eine gute Verarbeitbarkeit sollte die Partikelgröße allerdings auch nicht zu groß sein und ist daher gemäß einer Ausführungsform auf höchstens 25 $\mu$m begrenzt, besonders bevorzugt auf höchstens 5 $\mu$m.

Gemäß einer Ausführungsform beträgt der Anteil des Pigments am Feststoffgehalt der Beschichtung zwischen 7 Vol.-% und vorzugsweise höchstens 43 Vol.-%.

Gemäß einer Ausführungsform beträgt der Anteil des Füllstoffs am Feststoffgehalt der Beschichtung mindestens 1 Vol.-% und vorzugsweise höchstens 15 Vol.-%, bevorzugt zwischen mindestens 1,5 Vol.-% und höchstens 5 Vol.-%.

Gemäß einer Ausführungsform umfasst die Beschichtung ein Bindemittel, wobei der Anteil des Bindemittels am Feststoffgehalt wenigstens 50 Vol.-% und vorzugsweise höchstens 85 Vol.-% beträgt.

Sofern die Beschichtung und/oder die entsprechende Paste neben dem ersten Pigment ein weiteres Pigment umfasst, bezieht sich der Anteil des Pigments beispielsweise am Feststoffanteil im Rahmen der vorliegenden Offenbarung auf die jeweilige Summe der Pigmente. Entsprechendes gilt für das Verhältnis von Pigment zu Füllstoff.

Gemäß einer Ausführungsform ist oder umfasst das vom Pigment umfasste Material ein anorganisches Material, vorzugsweise ein hochtemperaturstabiles anorganisches Material, insbesondere ein hochtemperaturstabiles anorganisches oxidisches Material. Insbesondere kann also das Pigment als hochtemperaturstabiles anorganisches oxidisches Pigment ausgebildet sein.

Gemäß einer Ausführungsform umfasst das Pigment ein chromhaltiges Pigment, bevorzugt ein chromhaltiges Eisenoxid, beispielsweise einen chromhaltigen Hämatit, und/oder einen chromhaltigen Spinell oder ist aus einem solchen Material ausgebildet.

Solche Pigmente weisen eine besonders hohe thermische Stabilität auf sowie eine hohe chemische Inertheit insbesondere gegenüber den Glasbestandteilen des Glaspulvers in der Paste, was in Hinblick auf den Einbrand der Paste zur Herstellung der entsprechenden Emaillebeschichtung besonders vorteilhaft ist. So wird gemäß einer Ausführungsform die mögliche maximale Einbrandtemperatur nicht durch die Stabilität der Pigmente begrenzt. Dies ermöglicht in einer Weiterbildung der Erfindung den Einbrand der Paste auf einem Glas- oder Glaskeramiksubstrat bei hohen Temperaturen im Bereich von 500°C bis 1000°C, sodass während des Einbrandvorgangs der Beschichtung beispielsweise ein Glassubstrat thermisch vorgespannt werden kann und somit ein thermisch vorgespanntes Glaselement resultiert.

Gemäß einem Ausführungsbeispiel der Erfindung weist das in der Paste enthaltene Glaspulver eine Partikelgrößenverteilung des Äquivalentdurchmessers mit einem $d_{50}$-Wert im Bereich von 0,1 $\mu$m und 3 $\mu$m und insbesondere im Bereich zwischen 0,1 $\mu$m und 2 $\mu$m auf. Entsprechende Partikelgrößen gewährleisten eine homogene Verteilung der Pigment- und Füllstoffpartikel in der Beschichtung sowie die Ausbildung einer weitgehend homogenen Glasschicht während des Einbrandvorgangs.

Gemäß einer weiteren Ausführungsform ist das Substrat als Glassubstrat ausgebildet und ist oder umfasst vorzugsweise ein Kalk-Natron-Glas oder ein Borsilikatglas. Besonders bevorzugt kann die Beschichtung hier als Füllstoff $ZrO_2$, insbesondere auch als kubisch stabilisiertes $ZrO_2$. umfassen. Insbesondere kann in diesem Fall das Glaselement auch thermisch vorgespannt vorliegen. Eine solche Ausgestaltung kann auch deshalb vorteilhaft sein, weil auf diese Weise ein Element bereitgestellt wird, welches mit gut verfügbaren Komponenten hergestellt werden kann. Eine solche Ausgestaltung kann gerade für die Verwendung des Glaselements in einer Backofentür, also als sogenannte "Backofenscheibe", besonders vorteilhaft sein.

Gemäß einer weiteren Ausführungsform ist das Glas- oder Glaskeramiksubstrat scheibenförmig ausgebildet, beispielsweise als flache oder als gekrümmte oder gebogene Scheibe.

Gemäß einer weiteren Ausführungsform weist das Glas- oder Glaskeramiksubstrat eine Dicke zwischen mindestens 1 mm und höchstens 10 mm auf, vorzugsweise zwischen 2 mm und 8 mm.

Gemäß einer weiteren Ausführungsform umfasst die Beschichtung wenigstens ein Absorptionspigment und weist eine Dicke zwischen mindestens 2 $\mu$m und 20 $\mu$m, bevorzugt 3 $\mu$m bis 15 $\mu$m, auf. Die Nassfilmdicke der entsprechenden Beschichtung umfassend wenigstens ein Absorptionspigment, also die Dicke des auf das Substrat aufgebrachten Beschichtungsmittels, bzw. der Paste, liegt vorzugsweise zwischen 8 $\mu$m und 35 $\mu$m, bevorzugt zwischen 10 $\mu$m und 20 $\mu$m.

Gemäß einer weiteren Ausführungsform beträgt das Verhältnis von Pigment zu Füllstoff in der Beschichtung mindestens 0,75 : 1 und vorzugsweise höchstens 12,5 : 1, bezogen auf das Volumen, besonders bevorzugt zwischen 1,5:1 und 8:1.

Gemäß einer weiteren Ausführungsform wird die Beschichtung bereichsweise so aufgebracht oder ist so aufgebracht, dass wenigstens ein Bereich einer Hauptfläche des Glas- oder Glaskeramiksubstrats die Beschichtung aufweist und wenigstens ein Bereich der Hauptfläche des Glas- oder Glaskeramiksubstrats von der Beschichtung nicht bedeckt ist, wobei vorzugsweise wenigstens 60 %, bevorzugt wenigstens 65% und besonders bevorzugt wenigstens 70% der entsprechenden Hauptfläche die Beschichtung aufweisen, wobei vorzugsweise höchstens 95 % der Hauptfläche mit der Beschichtung beschichtet sind. Dabei kann die Beschichtung vorzugsweise in Form eines Rasters, wie eines Punktrasters, und/oder eines Rahmens aufgebracht sein. Unter einem Raster ist hierbei eine Anordnung von Punkten zu verstehen, die regelmäßig über eine Fläche verteilt sind, und beispielsweise als die Eckpunkte von sich kreuzenden rechtwinkligen Linien eines Gitters verstanden werden können. Im Rahmen der vorliegenden Offenbarung ist es dabei möglich, dass sich bei einem Punktraster die Größe der Punkte und/oder die Dichte der Punkte auf der zu beschichtenden Fläche graduell oder abschnittsweise ändert.

Es ist beispielsweise möglich und kann auch bevorzugt sein, dass die Beschichtung in einem Randbereich einer Hauptfläche des Glas- oder Glaskeramiksubstrats in Form eines Rahmens deckend aufgebracht ist und zur Mitte der Hauptfläche hin die Belegung der Hauptfläche mit der Beschichtung abnimmt und der Rahmen in ein Punktraster mit einem zunächst hohen Belegungsgrad übergeht und zur Mitte hin das Raster sich dahingehend ändert, dass der Belegungsgrad des Punktrasters abnimmt. Unter dem Belegungsgrad wird hierbei das Verhältnis der Fläche des beschichteten Bereichs bzw. der beschichteten Bereiche der Hauptfläche des Glas- oder Glaskeramiksubstrats bzw. des Glas- oder Glaskeramikelements zur Gesamtfläche der Hauptfläche des Glas- oder Glaskeramikelements bzw. -substrats bezeichnet. Der Belegungsgrad ergibt sich dabei also aus dem Verhältnis der Summe der mit der Beschichtung belegten Bereiche einer Hauptfläche im Vergleich zur gesamten betrachteten Hauptfläche des Glas- oder Glaskeramikelements bzw. in entsprechender Weise des Glas- oder Glaskeramiksubstrats. Mit anderen Worten ergibt sich allgemein der Belegungsgrad als Verhältnis der beschichteten Fläche zur Gesamtfläche der betrachteten Hauptfläche. Die beschichtete Fläche ist dabei die Fläche des belegten Bereichs bzw. im Falle des Vorliegens mehrerer solcher Bereiche die Summe der Fläche dieser Bereiche.

Das Vorliegen der Beschichtung als Rahmen kann dabei besonders bevorzugt sein, da beispielsweise auf diese Weise der direkte Kontakt der Oberfläche mit scharfkantigen oder abrasiven Gegenständen oder Bauteilen in einem Einbauzustand des Elements - beispielsweise also mit einem Metallrahmen oder metallischen Bauteilen als Halterungselementen - zumindest teilweise gemindert oder reduziert werden kann. Im Randbereich kann also die Beschichtung dann als eine Art Kratzschutzbeschichtung wirken. Da Kratzer in der Oberfläche eines Glas- oder Glaskeramiksubstrats oder Glas- oder Glaskeramikelements dessen mechanische Festigkeit verringern, ist eine solche Ausgestaltung, bei der die Beschichtung im Randbereich einen Rahmen bildet, somit vorteilhaft.

Auch in den übrigen Bereichen des Elements kann die Beschichtung noch als Kratz- oder Verschleißschutzbeschichtung wirken. Die mit der Beschichtung belegten Bereiche der Oberfläche des Elements sind nämlich im Vergleich zu den unbelegten Bereichen etwas erhöht, sodass die Beschichtung in diesem Fall als eine Art Abstandshalter zur Oberfläche wirkt. Kratzer auf der Oberfläche können so zwar nicht vollständig verhindert, aber zumindest etwas vermindert werden. Allerdings sollte der Belegungsgrad im mittleren Bereich des Elements nicht zu hoch sein, da beispielsweise solche beschichteten Elemente auch als Sichtscheibe, beispielsweise in einer Backofentür, verwendet werden können. Hier muss also ein Kompromiss zwischen einer ausreichenden Belegung zur möglichst gezielten Verminderungen von Oberflächenbeschädigungen und ausreichend freier Oberfläche zur Ermöglichung der Durchsicht durch das Element gefunden werden.

Vorzugsweise beträgt der Belegungsgrad mindestens 60%, vorzugsweise mindestens 65 % und besonders bevorzugt mindestens 70%. Der Belegungsgrad sollte vorzugsweise nicht größer als 90% sein.

Gemäß einer weiteren Ausführungsform ist auf der Seite des Glas- oder Glaskeramiksubstrats, auf welcher die Beschichtung angeordnet ist, keine weitere Beschichtung angeordnet und/oder ist der Gehalt der Beschichtung an leitfähigen Oxiden, insbesondere an leitfähigen Oxiden ausgewählt aus der Gruppe mit den Oxiden Indiumzinnoxid, Fluor-Zinn-Oxid, Aluminium-Zink-Oxid und/oder Antimon-Zinn-Oxid, kleiner als 500 ppm, bezogen auf das Gewicht.

Ein weiterer Aspekt der vorliegenden Offenbarung ist auf eine Paste gerichtet. Die Paste dient zur Herstellung einer Beschichtung auf einem Glas- oder Glaskeramiksubstrat zur Herstellung eines Glas- oder Glaskeramikelements nach Ausführungsformen. Sie umfasst eine Bindemittel-Vorläuferphase, wenigstens ein Pigment und wenigstens einen Füllstoff, wobei die Bindemittelvorläuferphase vorzugsweise ein glasiges Material ist oder umfasst, wobei das wenigstens eine Pigment vorzugsweise ein IR-reflektierendes Material umfasst und wobei der wenigstens eine Füllstoff ein Material mit einer spezifischen molaren Wärmekapazität von höchstens 5 mJ/(mol·K) und bevorzugt einer Wärmeleitfähigkeit von höchstens 12 W/(m·K) umfasst.

Gemäß einem weiteren Aspekt kann die Paste alternativ oder zusätzlich so ausgestaltet sein, dass sie wenigstens eine Bindemittel-Vorläuferphase, wenigstens ein Pigment und wenigstens einen Füllstoff umfasst, wobei die Bindemittel-Vorläuferphase vorzugsweise ein glasiges Material ist oder umfasst, wobei das wenigstens eine Pigment vorzugsweise ein IR-reflektierendes Material umfasst und wobei der Füllstoff Zirkoniumoxid und/oder ein Oxid eines Seltenerdelements umfasst.

Die Paste umfasst weiterhin neben den Feststoffen, also dem wenigstens einen Pigment, dem wenigstens einen Füllstoff und der wenigstens einen Bindemittel-Vorläuferphase noch einen flüchtigen Bestandteil, beispielsweise ein Lösungsmittel oder ein Gemisch aus Lösungsmitteln. Insbesondere kann der flüchtige Bestandteil als Siebdruckmedium ausgestaltet sein. Der Volumenanteil des flüchtigen Bestandteils an der Paste beträgt bevorzugt zwischen 40 Vol.-% und 80 Vol.-%.

Vorzugsweise ist der Füllstoff ausgebildet als oder umfasst $ZrO_2$, insbesondere kubisch stabilisiertes $ZrO_2$, insbesondere $HfO_2$ umfassendes, kubisches stabilisiertes $ZrO_2$, und/oder ist ausgebildet als oder umfasst ein Chalkogenid, insbesondere ein Oxid, gemäß der folgenden Formel:

$$A_{2+X}B_Y D_Z E_7,$$

wobei A wenigstens ein Element aus der Gruppe der Seltenen Erden ist und als dreiwertiges Kation vorliegt, B wenigstens ein Element ist, welches als vierwertiges Kation vorliegt, D wenigstens ein Element ist, welches als fünfwertiges Kation vorliegt, und E wenigstens ein Element ist, welches als zweiwertiges Anion vorliegt, und wobei gilt:

$$0 \leq X \leq 1{,}1,$$

$$0 \leq Y \leq 3,$$

$$0 \leq Z \leq 1{,}6,$$

und wobei weiterhin gilt:

$$8 \leq 3X + 4Y + 5Z \leq 15.$$

Gemäß einer Ausführungsform der Erfindung umfasst die Paste 10 bis 40 Gew.-% IR-reflektierende Pigmente, 2,5 Gew.-% bis 25 Gew.-% Füllstoff, 45 bis 85 Gew.-% Glaspulver und 12 bis 35 Gew.-% Lösungsmittel. Als Lösungsmittel für siebdruckfähige Beschichtungslösungen werden bevorzugt Lösungsmittel mit einem Dampfdruck von weniger als 10 bar, insbesondere von weniger als 5 bar und ganz besonders von weniger als 1 bar eingesetzt.

Solche Lösungsmittel oder Lösungsmittelgemische können auch als Siebdruckmedium oder Siebdrucköl bezeichnet werden. Dies können beispielsweise Kombinationen aus Wasser, n-Butanol, Diethylenglycolmonoethylether, Tripropylenglycolmonomethylether, Terpineol, n-Butylacetat sein. Um die gewünschte Viskosität einstellen zu können, werden entsprechende organische und anorganische Additive verwendet. Organische Additive können etwa Hydroxyethyl-Cellulose und/oder Hydroxypropyl-Cellulose und/oder Xanthan-gum und/oder Polyvinylalkohol und/oder Polyethylenalkohol und/oder Polyethylenglycol, Blockcopolymere und/oder Triblockcopolymere und/oder Baumharze und/oder Polyacrylate und/oder Polymethacrylate sein. Übliche kommerzielle Siebdrucköle können verwendet werden.

Durch die oben beschriebene Zusammensetzung der Paste wird gewährleistet, dass eine daraus hergestellte Beschichtung eine hohe IR-Reflektivität aufweist. Gleichzeitig sorgt der Anteil des Siebdruckmediums für eine gute Verarbeitbarkeit der Paste, insbesondere einer Verarbeitung mittels Siebdruck. Bevorzugt weist die Paste daher eine Viskosität im Bereich von 3,5 Pa*s bei einer Schergeschwindigkeit von 200/s bis 15 Pa*s bei einer Schergeschwindigkeit von 200/s, besonders bevorzugt im Bereich von 4,8 Pa*s bei einer Schergeschwindigkeit von 200/s bis 12,8 Pa*s bei einer Schergeschwindigkeit von 200/s auf.

Ein nochmals weiterer Aspekt ist auf eine Backofenscheibe für eine Backofentür gerichtet. Allgemein weist eine Backofentür einen Scheibenaufbau auf. Ein solcher Scheibenaufbau kann wenigstens zwei Glaselemente und/oder Glassubstrate umfassen. Vorteilhaft ist ein Scheibenaufbau, welcher wenigstens ein Glaselement nach einer Ausführungsform umfasst, wobei das Glaselement nach Ausführungsform vorzugsweise die äußere Scheibe des Scheibenaufbaus ist. Als äußere Scheibe wird dabei die Scheibe des Scheibenaufbaus bezeichnet, welche im Gebrauch des Backofens dem Benutzer zugewandt ist. Insbesondere kann es sich dabei um die Scheibe handeln, welche mit einem Griff zum Öffnen des Backofens verbunden ist oder zumindest verbunden werden kann oder verbindbar ausgestaltet ist. Als Backofenscheibe wird hierbei im Rahmen der vorliegenden Offenbarung allgemein eine Scheibe, also ein scheibenförmig ausgebildetes Glas- oder Glaskeramikelement oder Glas- oder Glaskeramiksubstrat, bezeichnet, vorzugsweise ein scheibenförmiges Glaselement odersubstrat verstanden, welches bestimmt und/oder geeignet für den Einbau in eine Backofentür ist.

Die Backofenscheibe gemäß einer Ausführungsform umfasst ein Glaselement nach einem Ausführungsform, wobei das Glaselement auf nur einer Hauptfläche die Beschichtung umfasst, wobei die Beschichtung lateral strukturiert aufgebracht ist, wobei bevorzugt wenigstens 60 %, besonders bevorzugt wenigstens 65 % und ganz besonders bevorzugt wenigstens 70% der Hauptfläche des Glaselements mit der Beschichtung bedeckt sind, und wobei ganz besonders bevorzugt das Glaselement keine weitere Beschichtung umfassend oder aus einem transparenten leitfähigen Oxid umfasst, und wobei vorzugsweise das Glaselement als vorgespanntes Glaselement vorliegt.

Die vorliegende Offenbarung betrifft auch eine Kaminsichtscheibe umfassend oder aus einem Glaskeramikelement nach Ausführungsformen.

Ein nochmals weiterer Aspekt ist auf ein Verfahren zur Herstellung eines Glas- oder Glaskeramikelements nach Ausführungsformen gerichtet, welches die folgenden Schritte umfasst:

- Bereitstellung eines transparenten Glas- oder Glaskeramiksubstrates,

- Bereitstellen einer Paste, insbesondere einer Paste nach Ausführungsformen, umfassend ein Glaspulver mit einer Erweichungstemperatur $EW_{Glaspulver}$, wobei $EW_{Glaspulver}$ unterhalb der Verformungstemperatur des Substratmaterials liegt, zumindest ein IR-reflektierendes Pigment und ein Siebdruckmedium,

- lateral strukturiertes Aufbringen der bereitgestellten Paste auf wenigstens eine Hauptfläche des bereitgestellten Glas- oder Glaskeramiksubstrats mittels Siebdruck, sodass ein Nassfilm der Beschichtung erhalten wird,

- Einbrennen des Nassfilms unter Ausbildung der Beschichtung bei Temperaturen im Bereich von $T_{Einbrand} > Tg_{Glaspulver}$,

wobei vorzugsweise das Substrat ein Glassubstrat, besonders bevorzugt ein Kalknatronglas oder ein Borosilikatglas ist und das Glassubstrat gemeinsam mit dem Einbrennen der aufgebrachten Beschichtung thermisch vorgespannt wird,

und/oder

wobei vorzugsweise die Einbrandtemperatur im Bereich von 500°C bis 1000°C, bevorzugt im Bereich von 500°C bis 700°C liegt,

und/oder

wobei vorzugsweise das Substrat ein kristallisierbares Grünglas ist und gemeinsam mit dem Einbrand der Beschichtung die Keramisierung des Grünglases erfolgt,

und/oder

wobei der Einbrand der Beschichtung strukturerhaltend erfolgt

und/oder

wobei die Beschichtung ein Absorptionspigment umfasst und die Dicke des Nassfilms mindestens 8 $\mu$m und höchstens 35 $\mu$m, bevorzugt mindestens 10 $\mu$m und höchstens 25 $\mu$m beträgt.

Unter einem strukturerhaltenden Einbrand wird hierbei verstanden, dass die lateral strukturierte Auftragung der Beschichtung, sodass also unbelegte und mit der Beschichtung belegte Bereiche erhalten werden, durch den Einbrand erhalten bleibt.

Beispiele

Der technische Effekt der Erniedrigung der Oberflächentemperatur eines die Beschichtung umfassenden Glasoder Glaskeramikelements kann beispielhaft an einem Scheibenaufbau, wie er beispielsweise bei Backofentüren bekannt ist, gezeigt werden. Im Rahmen der vorliegenden Offenbarung kann ein Glas- oder Glaskeramikelement, welches in einer Backofentür oder in einem Scheibenaufbau für eine Backofentür verwendet wird, auch als Backofentürscheibe bezeichnet werden. Verkürzt kann ein solches Glas- oder Glaskeramikelement auch als "Backofenscheibe" bezeichnet werden, wobei hier aber stets eine Backofentürscheibe gemeint ist. Sofern im Rahmen der vorliegenden Offenbarung von einer äußeren Backofenscheibe (oder Backofentürscheibe) gesprochen wird, handelt es sich dabei um dasjenige Glas- oder Glaskeramikelement, welches im bestimmungsgemäßen Gebrauch einer Backofentür einem Benutzer zugewandt ist. Je nach dem genauen Aufbau der Backofentür kann das äußere Glas-oder Glaskeramikelement anders ausgestaltet sein als die weiteren Glas- oder Glaskeramikelemente oder —substrate des Scheibenaufbaus. Beispielsweise kann das äußere Glas- oder Glaskeramikelement eine andere Größe aufweisen, beispielsweise, um den Einbau in einen Rahmen zu ermöglichen oder um mit einer Dichtung einer Ofenmuffel zusammenzuwirken, oder es können am äußeren Element auch Bauteile, beispielsweise ein Türgriff, zum Öffnen angebracht sein.

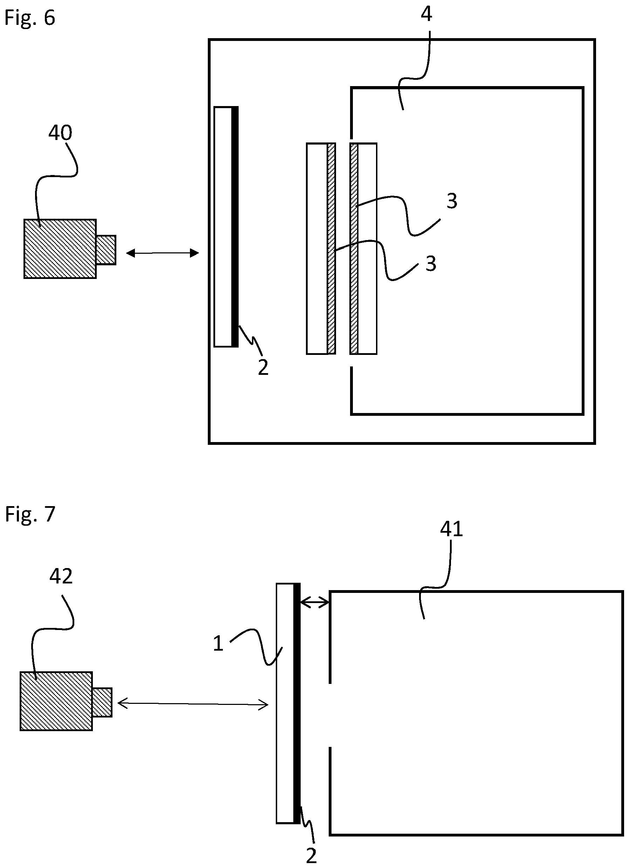

Zur Bestimmung der Außentemperatur an einem solche äußeren Glaselement ist ein Aufbau zweckmäßig, wie er beispielsweise in der internationalen Patentanmeldung WO 2019/101873 A1 beschrieben ist. Ein Element nach einer Ausführungsform, insbesondere ein Glaselement, wird dabei als Außenscheibe in eine Backofentür eingebaut. Die Oberflächentemperatur der Außenseite des Elements wird mit einer IR-Kamera ermittelt, wobei im Abstand von einer Minute ein entsprechendes IR-Wärmebild aufgenommen wird. In dem in der WO 2019/101873 A1 beschrieben Aufbau beträgt dabei der Abstand zwischen der Wärmebildkamera zur äußeren Scheibe 203,2 cm. Das Volumen des Backofens betrug 28,317 l bzw. 5,3 ft$^3$. Die Messungen werden jeweils bei einer Backofeninnentemperatur von 875°F bzw. 468°C sowie bei 475°F bzw. 246°C durchgeführt. Ein solcher Messaufbau kann schematisch der weiter unten beschriebenen Fig. 6 entnommen werden.

Alternativ ist auch eine Bestimmung mittels eines Labor-Messaufbaus möglich, wie er gleichfalls in der WO 2019/101873 A1 beschrieben ist. Die jeweiligen Oberflächentemperaturen der Scheiben werden hierbei mit einem Pyrometer 42 (impac, IE 120/82L) ermittelt, wobei der Fokuspunkt auf die Außenseite der dekorierten Scheibe gesetzt und im Abstand von einer Minute ein entsprechender Messwert aufgezeichnet wird. Der Abstand des Pyrometers 42 zur äußeren Scheibe der Backofentür beträgt hierbei 50 cm. Im Testaufbau beträgt das Volumen des Ofens $30 \times 12 \times 12$ cm$^3$. Der Abstand der dekorierten Scheibe zum Ofen beträgt hier 2 cm und die Ofenöffnung hat einen Durchmesser von 3 cm. Die gemessenen Scheiben sind vollflächig beschichtet. Ein solcher Laboraufbau ist auch weiter unten schematisch in Fig. 7 gezeigt.

Werden Beschichtungen nach Ausführungsformen beispielsweise mit Beschichtungen nach WO 2019/101873 A1 in einem der beiden vorgenannten Messaufbauten gemessen und die Messergebnisse miteinander verglichen, so zeigt sich, dass die Außentemperatur der äußeren Scheibe bzw. des äußeren Glaselements nach Ausführungsformen der vorliegenden Offenbarung nochmals gesenkt werden kann.

Beispielsweise ist es möglich, bei Herstellung einer Beschichtung mit einer Paste, welche neben 17,5 Vol.-% eines IR-reflektierenden Pigments noch 1,4 Vol.-% eines Füllstoffs, hier ZrO$_2$, umfasst, die Außentemperatur des Glaselements, welches mit einer mit einer solchen Paste erhaltenen Beschichtung versehen ist, nochmals um etwa 2°C zu senken im Vergleich zu einem Glaselement, bei welchem die Beschichtung lediglich ein IR-reflektierendes Pigment umfasst. Die beschichtete Seite des Glaselements ist dabei dem Ofeninnenraum zugewandt. Die Partikelgröße des Füllstoffs betrug hier 20 μm (angegeben als d$_{50}$-Wert des Äquivalentdurchmessers).

Mit einer Paste umfassend 15 Vol.-% eines IR-reflektierenden Pigments und 2,5 Vol.-% eines Mischoxids umfassend ZrO$_2$ und ein Oxid eines Seltenerdelements kann die Außentemperatur sogar nochmals um 4°C gegenüber einem Glaselement, bei welchem die Beschichtung nur das entsprechende IR-reflektierende Pigment umfasst, gesenkt werden. Die beschichtete Seite des Glaselements ist dabei dem Ofeninnenraum zugewandt. Die Partikelgröße d$_{50}$ des Füllstoffs betrug hier etwa 1 μm (angegeben als d$_{50}$-Wert des Äquivalentdurchmessers). Der Füllstoff wies hier die Zusammensetzung Nd$_2$Zr$_2$O$_7$ auf.

Dabei hat sich allerdings überraschenderweise gezeigt, dass eine solche hohe Reduktion der Außentemperatur auch von der Partikelgröße des verwendeten Füllstoffs abhängt. Wird beispielsweise die Partikelgröße von Nd$_2$Zr$_2$O$_7$ herabgesetzt und beträgt nur noch 50 nm (bezogen auf den d$_{50}$-Wert des Äquivalentdurchmessers), so kann nur noch eine Reduktion von 1,5°C festgestellt werden bei ansonsten gleichen Gehalten des Füllstoffs in der Paste bzw. der resultierenden Beschichtung.

Darüber hinaus hat sich gezeigt, dass auch weitere Eigenschaften der Beschichtung, wie beispielsweise die Dichtigkeit der Beschichtung gegenüber dem Durchtritt von Fluiden, durch den Zusatz eines Nanofüllstoffs umfassend ein Mischoxid umfassend oder aus einem Oxid eines Seltenerdelements sowie ZrO$_2$ und/oder HfO$_2$ in Mitleidenschaft gezogen werden können. Beispielsweise ist bei der Verwendung eines nanoskaligen Nd$_2$Zr$_2$O$_7$-Füllstoffs die Dichtigkeit der resultierenden Beschichtung nicht ausreichend. Dies bedeutet, dass beispielsweise Flüssigkeiten in die Beschichtung eindringen können. Dies kann nicht nur optisch störend sein, sondern auch zu einer Beschädigung der Beschichtung führen, beispielsweise im Falle aggressiver Reinigungsmittel und/oder einem Erhitzen der Beschichtung.

Es hat sich damit gezeigt, dass insbesondere Partikelgrößenverteilungen des Äquivalentdurchmessers mit einem d$_{50}$ zwischen 0,15 μm, bevorzugt 0,25 μm, insbesondere bevorzugt 0,5 μm, und 5 μm besonders vorteilhaft sind, um Beschichtungen nach Ausführungsformen zu erhalten. Größere Partikel können ebenfalls verwendet werden, führen aber ggf. zu raueren Beschichtungen. Auch kann ggf. die Auflösung für den Fall eines lateral strukturierten Auftrags der Beschichtung herabgesetzt sein. Allgemein kann der Füllstoff Füllstoffpartikel umfassen mit einer Größenverteilung mit einem $d_{50}$-Wert des Äquivalentdurchmessers im Bereich zwischen 0,15 $\mu$m und 25 $\mu$m, bevorzugt im Bereich von 0,2 $\mu$m bis 25 $\mu$m, ganz besonders bevorzugt von 0,5 $\mu$m bis 5 $\mu$m.

In der folgenden Tabelle sind verschiedene geeignete Füllstoffe bzw. Materialien, die von geeigneten Füllstoffen umfasst sein oder den Füllstoff ausbilden können, zusammengestellt.

*Tabelle 5*

| Material | Wärmeleitfähigkeit | Spezifische molare Wärmekapazität |
|---|---|---|
| | [W/(m·K)] | [mJ/(mol·K)] |
| $TiO_2$ | 3-4 | 8,76 |
| $Y_2O_3$ | 8-12 | 1,99 |
| $ZrO_2$ | 1,5-3 | 3,65 |
| $La_2Zr_2O_7$ | 2 | 0,61 |
| $Gd_2Zr_2O_7$ | 1,8 | 0,69 |
| $Nd_2Zr_2O_7$ | 1,25 | 0,69 |
| $La_2Hf_2O_7$ | 1,93 | 0,52 |
| 8YSZ | 2,09 | 4,18 |

Hierbei steht 8YSZ für mit 8 Mol.-% $Y_2O_3$ stabilisiertes $ZrO_2$.

Beschreibung der Zeichnungen

Im Folgenden wird die Erfindung anhand von Figuren näher erläutert. Dabei beziehen sich gleiche Bezugszeichen auf dieselben oder einander entsprechende Elemente. Es zeigen

Fig. 1 bis 3      schematische und nicht maßstabsgetreue Seitenansichten von Glas- oder Glaskeramikelementen

Fig. 4      eine schematische und nicht maßstabsgetreue Darstellung eines Ausschnitts einer Beschichtung,

Fig. 5      eine schematische und nicht maßstabsgetreue Aufsicht auf ein Glas- oder Glaskeramikelement,

Fig. 6 und 7      schematische Darstellungen von Messaufbauten,

Fig. 8      eine schematische Darstellung eines Scheibenaufbaus für eine Backofentür, sowie

Fig. 9      ein Diagramm der Temperatur einer Backofentür in Abhängigkeit von der Zeit.

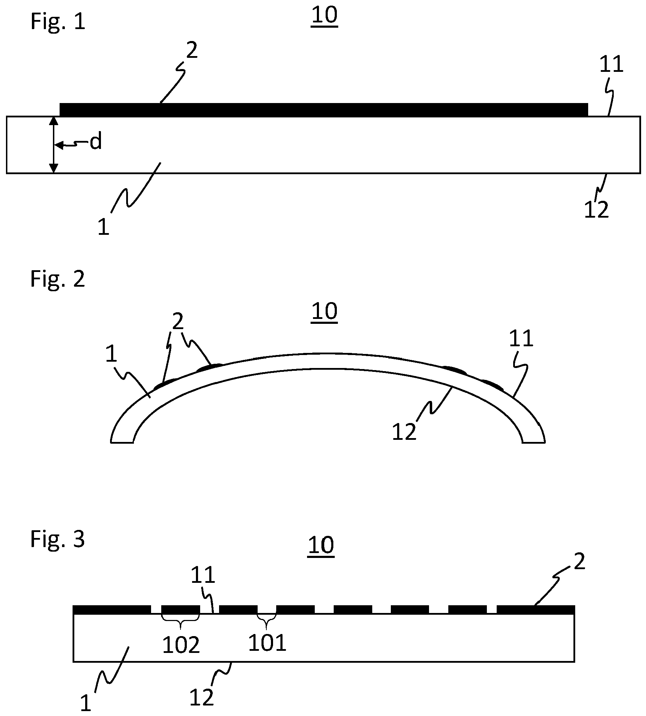

Fig. 1 zeigt eine erste schematische und nicht maßstabsgetreue Abbildung eines Glas- oder Glaskeramikelements 10 für ein Haushalts- und/oder Heizgerät, das ein scheibenförmiges transparentes Glas- oder Glaskeramiksubstrat 1 umfasst. Das hier scheibenförmig ausgebildete Substrat 1 ist hier eben ausgebildet, also nicht gekrümmt. Substrat 1 weist eine erste Oberfläche 11 sowie eine zweite Oberfläche 12 auf, welche der ersten Oberfläche 11 gegenüberliegt. Die Oberflächen können auch als Seiten oder Seitenflächen bezeichnet werden und stellen sogenannte Hauptflächen des Glas- oder Glaskeramiksubstrats 1 bzw. entsprechend des Glas- oder Glaskeramikelements 10 dar, denn sie machen zusammen mehr als 50 % der Oberfläche des Substrats aus. Weiterhin ist auch die Dicke d des Glas- oder Glaskeramiksubstrats 1 bezeichnet. Die Dicke des Glas- oder Glaskeramiksubstrats 1 kann dabei auch näherungsweise als die Dicke des Glas- oder Glaskeramikelements 10 angenommen werden, denn anders als vorliegend aus Gründen der besseren Darstellbarkeit gezeigt ist die (nicht bezeichnete) Dicke der Beschichtung 2 nur sehr gering im Vergleich zur Dicke des Glas- oder Glaskeramiksubstrats 1.

Die Beschichtung 2 ist auf wenigstens einer der Hauptflächen 11, 12, nämlich hier auf der Hauptfläche 11 des Substrats 1, zumindest bereichsweise angeordnet. Hierunter ist zu verstehen, dass die Beschichtung 2 nicht die gesamte Hauptfläche 11 bedecken muss, sondern auch lediglich in einem Abschnitt aufgebracht sein kann, sodass ein anderer Bereich der Hauptfläche nicht mit der Beschichtung 2 bedeckt ist. Hier ist die Beschichtung in einem mittleren Bereich der Hauptfläche 11 angeordnet, sodass ein Randbereich frei bleibt. Selbstverständlich ist aber auch eine vollflächige Belegung möglich. Es ist weiterhin auch möglich, dass die Beschichtung nicht nur auf einer Hauptfläche angeordnet ist, sondern auf beiden Hauptflächen 11, 12 des Substrats 1. Die Beschichtung 2 umfasst wenigstens ein Pigment, welches als IR-reflektierendes Pigment ausgebildet ist, und wenigstens einen Füllstoff, wobei der wenigstens eine Füllstoff ein Material mit einer spezifischen molaren Wärmekapazität von höchstens 5 mJ/(mol·K) und bevorzugt einer Wärmeleitfähigkeit von höchstens 12 W/(m·K) umfasst. Gemäß einem weiteren Aspekt kann die Beschichtung 2 auch beschrieben werden als umfassend wenigstens ein Pigment und wenigstens einen Füllstoff, wobei das Pigment IR-reflektierend ausgebildet ist und wobei der Füllstoff Zirkoniumoxid und/oder Hafniumoxid und/oder ein Oxid eines Seltenerdelements ist oder umfasst. Die Beschichtung 2 ist als, glasbasierte Beschichtung, vorzugsweise als Emaillebeschichtung, ausgebildet.

Fig. 2 zeigt eine weitere schematische und nicht maßstabsgetreue Darstellung einer Ausführungsform eines Glas- oder Glaskeramikelements 10 umfassend ein hier scheibenförmiges transparentes Glas- oder Glaskeramiksubstrat 1. Das scheibenförmige Substrat 1 weist hier wiederum zwei Hauptflächen 11, 12, auf, welche einander gegenüberliegen, und auf einer der Hauptflächen 11, 12, nämlich hier der Hauptfläche 11, ist bereichsweise die Beschichtung 2 angeordnet. Das scheibenförmige Substrat 1 ist hier als gebogene Scheibe ausgebildet. Allgemein, ohne Beschränkung auf das hier dargestellte Beispiel, ist es möglich, dass beide Hauptflächen 11, 12 zumindest bereichsweise eine Beschichtung 2 umfassen.

Fig. 3 zeigt eine nochmals weitere Darstellung einer Ausführungsform eines Glas- oder Glaskeramikelements 10 nach einer Ausführungsform zur genaueren Erläuterung einer lateral strukturierten Auftragung der Beschichtung 2. Das Glas- oder Glaskeramikelement 10 ist hier so ausgestaltet, dass die Beschichtung 2 lateral strukturiert aufgebracht ist. Dies bedeutet, dass wenigstens ein Bereich 101 der Hauptfläche 11, 12, hier der Hauptfläche 11, des Substrats 1 keine Beschichtung 2 aufweist, wohingegen ein anderer Bereich 102 die Beschichtung 2 aufweist. Auch hier ist es wieder ganz allgemein möglich, dass die Beschichtung 2 beidseitig aufgebracht ist. Insbesondere ist es allgemein, ohne Beschränkung auf die in Fig. 3 dargestellte beispielhafte Ausführungsform eines Glas- oder Glaskeramikelements 10 möglich, dass die Beschichtung 2 in der Form aufgetragen ist, dass mehrere Bereiche 102 und/oder mehrere Bereiche 101 vorliegen.

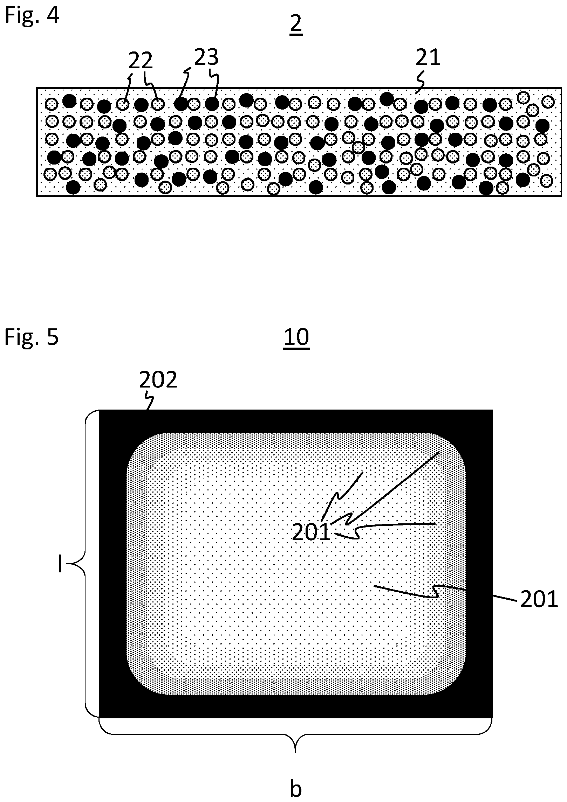

Fig. 4 zeigt eine schematische und nicht maßstabsgetreue Schnittdarstellung einer Beschichtung 2. Die Beschichtung 2 ist so ausgebildet, dass sie Pigmentpartikel 22 sowie Füllstoffpartikel 23 umfasst. Weiterhin umfasst die Beschichtung das Bindemittel 21. Dieses Bindemittel 21 kann insbesondere glasbasiert ausgebildet sein, wobei vorzugsweise die Beschichtung 2 als Emaillebeschichtung ausgebildet ist, also umfassend einen glasigen Bestandteil, welcher bei Erwärmen zumindest teilweise aufschmilzt und die von der Beschichtung umfassten partikulären Bestandteile umgibt und miteinander und mit dem Substrat 1 verbindet.

Die Ausführungsform der Beschichtung 2, welche in Fig. 4 dargestellt ist, ist eine besonders bevorzugte Ausführungsform. Die Pigmentpartikel 22 sowie die Füllstoffpartikel 23 sind hierbei nämlich so ausgebildet, dass sie recht ähnliche Partikelgrößen umfassen. Allgemein sind

Partikelgrößen des Pigments von weniger als 10 $\mu$m, insbesondere zwischen 0,15 $\mu$m und 2 $\mu$m, bevorzugt. Die Pigmentpartikel können beispielsweise eine Größenverteilung mit einem $d_{50}$-Wert des Äquivalentdurchmesser im Bereich zwischen 0,5 $\mu$m bis 1,8 $\mu$m, beispielsweise von 0,8 $\mu$m bis 1,8 $\mu$m, aufweisen. Die Füllstoffpartikel 23 können allgemein Partikelgrößen zwischen 50 nm und bis zu 25 $\mu$m aufweisen. Allerdings sind sehr geringe Partikelgrößen von weniger als 0,1 $\mu$m nicht bevorzugt, denn es hat sich gezeigt, dass bei nanoskaligen Füllstoffen der Effekt der Temperaturminimierung bei der Sichtscheibe zwar beobachtet werden kann, allerdings weniger stark ausgeprägt ist als bei größeren Partikelgrößen. Zwar können die Füllstoffpartikel auch bis zu 25 $\mu$m (bezogen auf den $d_{50}$-Wert des Äquivalentdurchmessers) verwendet werden. Dies ist aber aus Gründen der Verarbeitbarkeit nicht bevorzugt. Auch werden mit solchen großen Füllstoffpartikeln eher raue Beschichtungen erhalten. Dies kann nachteilig sein. Zwar sind die Füllstoffe vorliegend so ausgebildet, dass sie harte Partikel umfassen, sodass eine Verringerung der Verschleißbeständigkeit der Beschichtung durch eine raue Oberfläche, die beispielsweise für Schaber zur Reinigung mehr Angriffsfläche bietet, hier weniger wahrscheinlich ist. Allerdings kann es damit zu einer Beschädigung von Materialien, die mit der Beschichtung in Kontakt treten kommen. Außerdem führt die Verwendung von großen Partikeln wegen der dadurch nötigen größeren Siebweite beispielsweise in einem Siebdruckverfahren zu einer verschlechterten Auflösung.

Zudem kann die Verwendung von Partikeln, welche zumindest näherungsweise die gleiche Größe haben, vorteilhaft sein, um eine möglichst gute Verteilung der Pigmentpartikel in der Beschichtung zu erzielen. Dies kann vorteilhaft für die Deckwirkung der Beschichtung sein.

Fig. 5 zeigt schließlich eine Aufsicht auf eine beispielhaftes Glas- oder Glaskeramikelement 10 nach einer Ausführungsform. Das Glas- oder Glaskeramikelement 10 bzw. in entsprechender Weise das (hier nicht bezeichnete) Glas- oder Glaskeramiksubstrat 1 weist eine Länge l und eine Breite b auf. Die Beschichtung 2 ist hier in der Form lateral strukturiert auf einer Hauptfläche des Substrats angeordnet, dass in einem Randbereich des Elements die Beschichtung als deckende Beschichtung in Form eines Rahmens 202 aufgebracht ist. Unter einer deckenden Beschichtung wird hierbei verstanden, dass im Bereich des Rahmens der Belegungsgrad der Beschichtung nahezu 100% ist, also im Bereich des Rahmens die Beschichtung 2 vollflächig aufgebracht ist. In einem mittleren Bereich des Substrats 1 bzw.

des Glas- oder Glaskeramikelements 10 ist die Beschichtung in Form von Rastern 201 mit unterschiedlichen Belegungsgraden aufgebracht. Vorzugsweise ist der für die gesamte Hauptfläche des Glas- oder Glaskeramikelements 10 berechnete Belegungsgrad zwischen mindestens 60% und höchstens 90%. Bevorzugt ist der Belegungsgrad mindestens 65%, besonders bevorzugt mindestens 70%. Der Belegungsgrad ergibt sich dabei aus dem Verhältnis der Summe der mit der Beschichtung 2 belegten Bereiche 102 im Vergleich zur gesamten Hauptfläche des Glas- oder Glaskeramikelements 10 bzw. in entsprechender Weise des Glas- oder Glaskeramiksubstrats 1. Mit anderen Worten ergibt sich allgemein der Belegungsgrad als Verhältnis der beschichteten Fläche einer Hauptfläche zur Gesamtfläche der betrachteten Hauptfläche. Die beschichtete Fläche ist dabei die Fläche des belegten Bereichs 102 bzw. im Falle des Vorliegens mehrerer solcher Bereiche 102 die Summe der Fläche dieser Bereiche 102.

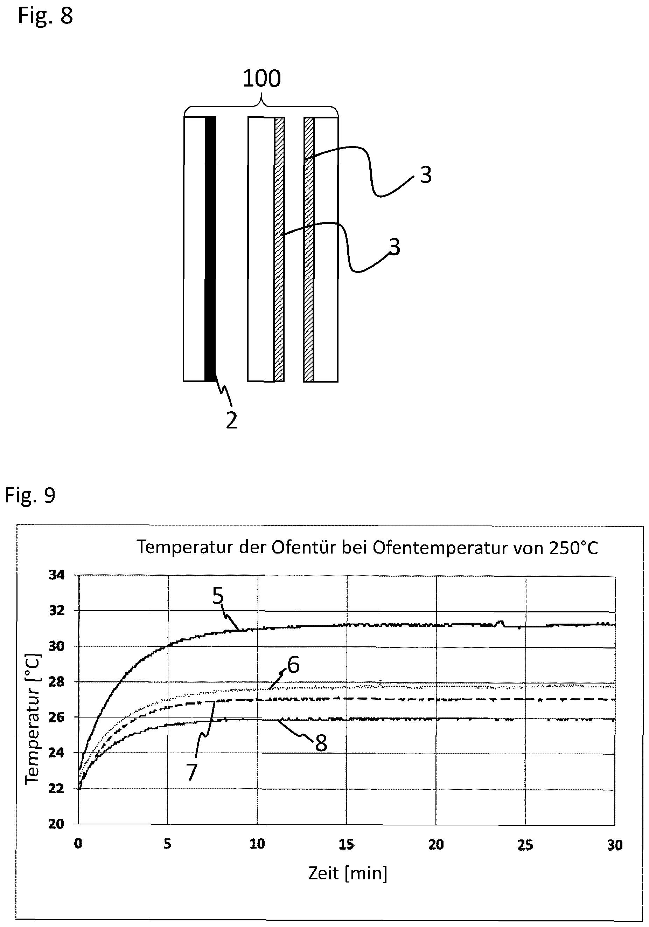

In Fig. 6 ist eine Variante eines ersten Messaufbaus zur Ermittlung der Außentemperatur der Ofentür schematisch dargestellt. Hierbei wird ein haushaltsüblicher Backofen 4 mit einem Volumen von 28,317 l bzw. 5,3 ft$^3$ auf 246°C (maximale Betriebstemperatur im Backmodus) bzw. 468°C (maximale Betriebstemperatur im Pyrolysemodus) aufgeheizt. Die Backofentür weist bei dieser Messanordnung drei Scheiben auf, wobei die inneren beiden Glasscheiben jeweils eine - Beschichtung 3 aufweisen. Die Beschichtungen 3 sind hierbei auf den sich zugewandten Hauptflächen der beiden inneren Glasscheiben angeordnet. Die Beschichtungen 3 sind dabei insbesondere als TCO-umfassende Schichten oder TCO-Schichten ausgebildet und können auch als low-e-Schichten bezeichnet werden. Bei den untersuchten Ausführungsbeispielen weist die äußere Glasscheibe eine Beschichtung 2 umfassend ein IR-reflektierendes Pigment sowie einen Füllstoff umfassend oder aus einem ein Material mit einer spezifischen molaren Wärmekapazität von höchstens 5 mJ/(mol·K) und bevorzugt einer Wärmeleitfähigkeit von höchstens 12 W/(m·K) auf, wobei die Beschichtung 2 auf der Seite der Glasscheibe aufgebracht ist, die dem Ofeninnenraum zugewandt ist. Die jeweiligen Oberflächentemperaturen der Scheiben wurden hierbei mit einer IR-Kamera 40 der Firma Fluke ermittelt, wobei im Abstand von einer Minute ein entsprechendes IR-Wärmebild aufgenommen wurde. Der Abstand der Wärmebildkamera zur äußeren Scheibe der Backofentür betrug hierbei 203,2 cm. Aus den so erhaltenen Wärmebildern wurden die entsprechenden Temperaturen ermittelt. Im Testaufbau betrug das Volumen des Backofens 28,317 l bzw. 5,3 ft$^3$. Einen entsprechenden Scheibenaufbau 100 der Backofentür kann man Fig. 8 entnehmen.

In Fig. 7 ist schematisch eine weitere Messanordnung zur Bestimmung der Oberflächentemperaturen einer beschichteten Glasscheibe unter Laborbedingungen dargestellt. Hierbei wird ein Laborofen 41 auf eine Temperatur von 250 bzw. 450°C geheizt. Der Ofen weist eine Öffnung mit einem Durchmesser von 3 cm auf. In einem Abstand von 0,5 cm zu dieser Öffnung wird die zu vermessende Glasscheibe 1 mit der Beschichtung 2 platziert, wobei die Beschichtung 2 in Richtung der Ofenöffnung zeigt. Die Oberflächentemperatur der beschichteten Glasscheibe 1 wird mit einem Pyrometer (impac, IE 120/82L) 42 bestimmt. Das Pyrometer 42 ist hierbei hinter dem zu messenden dekorierten Glassubstrat 1 und in einem Abstand von 50 cm zur zu vermessenden Glasscheibe 1 angeordnet.

Weiterhin zeigt Fig. 8 schematisch den Aufbau der Backofentür bzw. den Scheibenaufbau 100 für eine Backofentür. Die unbeschichtete Seite des Substrates 1 ist hierbei in der Abbildung links angeordnet und weist dabei nach außen (in der Abbildung also nach links). Die mittlere und die innere Scheibe der Backofentür bzw. des Scheibenaufbaus sind jeweils einseitig mit einer Beschichtung 3 beschichtet. Die Beschichtung 3 enthält hier transparente, leitfähige Oxide bzw. ist hier als TCO-Schicht ausgebildet. Die mittlere und innere (hier also rechte) Scheiben sind dabei so angeordnet, dass die Beschichtungen 3 zueinander weisen.

Schließlich zeigt Fig. 9 ein Diagramm, in welchem für einen Messaufbau nach Fig. 7 die Oberflächentemperatur einer Ofentür bzw. eines beschichteten Glas- oder Glaskeramiksubstrats in Abhängigkeit von der Zeit bei der Verwendung verschiedener Beschichtungen aufgetragen ist. Die Kurve 5 entspricht dabei dem Temperaturverlauf, wie er für eine glasbasierte Beschichtung umfassend ein Schwarzpigment (hier Pigment Black 28) erhalten wird. Die maximal gemessenen Temperaturen wurden auch mit dem Aufbau von Fig. 6 gemessen.

Die Kurven 6, 7 und 8 zeigen den Temperaturverlauf, wie er für glasbasierte Beschichtungen nach Ausführungsformen der vorliegenden Offenbarung, welche neben einem Schwarzpigment noch jeweils einen Füllstoff umfassen, erhalten wird.

So umfasst die Beschichtung entsprechend dem Kurvenverlauf 6 zusätzlich zu einem Schwarzpigment (Pigment Brown 29) noch den Füllstoff PC1 entsprechend Tabelle 2 der vorliegenden Beschreibung (ZrO$_2$), und zwar zu einem Gehalt von 2,5 Vol.-%, bezogen auf den Feststoffanteil der Beschichtung. Es kann deutlich erkannt werden, dass durch die Verwendung dieses Füllstoffs die Außentemperatur an der Ofentür auch nach einer Zeit von 30 Minuten (weniger als 28°C, Kurve 6) deutlich geringer ist als die, welche bei einer Beschichtung, die keinen Füllstoff umfasst (ca. 31°C, Kurve 5), vorliegt. Bereits mit dem Füllstoff PC1 kann also hier eine Reduktion der Außentemperatur von 3°C oder sogar mehr erhalten werden. Wie aus dem Diagramm von Fig. 9 ersichtlich ist, handelt es sich dabei auch nicht um einen kurzzeitigen Effekt, sondern vielmehr verlaufen die Oberflächentemperaturen nach einer Zeit von etwa 10 Minuten in einem Plateau, bleiben also mehr oder weniger konstant.

Dieser Temperaturunterschied, welcher mit dem Füllstoff PC1 auftritt, kann nochmals gesteigert werden, wenn ein anderer Füllstoff, beispielsweise ein Füllstoff mit noch günstigeren thermischen Eigenschaften, beispielsweise der Füllstoff PC2 (Nd$_2$O$_3$·2ZrO$_2$, Kurve 7) oder der Füllstoff PC3 umfassend 33,33 Mol-% Nd$_2$O$_3$, 44,44 Mol-% ZrO$_2$ und

22,22 Mol-% $Fe_2O_3$, Kurve 8, verwendet wird. Mit PC2 wird eine Senkung der Oberflächentemperatur auf ca. 27°C erzielt, also eine Absenkung um etwa 4°C gegenüber einer Ausführung einer glasbasierten Beschichtung ohne Füllstoff, mit PC3 sogar nochmals weiter auf unter 26°C, also eine Absenkung um 5°C. In den Beschichtungen, welche den Kurven 7 und 8 entsprechend, wurde jeweils ebenfalls als Schwarzpigment das Pigment Brown 29 verwendet sowie der jeweils angegebene Füllstoff mit 2,5 Vol.-%, bezogen auf den Feststoffanteil der Beschichtung.

Zu beachten hierbei ist aber, dass der hier betrachtete Temperaturunterschied zwischen den Plateautemperaturen bzw. der Maximaltemperaturen ($T_{Max}$), welche sich nach etwa 10 bis 15 Minuten an der Außenseite der Oberfläche der Ofentür bzw. eines beschichteten Glas- oder Glaskeramiksubstrats einstellt, an sich nicht ganz eindeutig ist, da, wie auch ebenfalls aus dem Diagramm in Fig. 9 ersichtlich ist, die Temperaturen zu Beginn der Messung ($T_0$) jeweils unterschiedlich waren. Diese Ausgangstemperatur $T_0$ entsprechen dabei im Wesentlichen der Raumtemperatur zu Beginn der Messungen und können daher schwanken.

Daher wird der technische Effekt im Folgenden noch anhand der Daten der folgenden Tabelle weiter erläutert. In der folgenden Tabelle ist jeweils die Maximaltemperatur $T_{Max}$ aufgeführt, wobei hier $T_{Max}$ zum Zeitpunkt von 30 Minuten ab Beginn der Messung ermittelt wurde. To ist die Temperatur bei Messbeginn. $\Delta T$ bezeichnet die Differenz zwischen Maximaltemperatur $T_{Max}$ und To, $T_{Max}-T_0$.

Angegeben sind weiterhin die Bestandteile der Beschichtung, wobei für die Pigmente sowie ggf. die Füllstoffe auch der prozentuale Anteil aufgeführt wurde. Die prozentualen Angaben beziehen sich jeweils auf den Feststoffgehalt der Beschichtung bzw. der Paste und sind auf das Volumen bezogen (Vol.-% des Feststoffanteils).

*Tabelle 6*

| Probe | | | Ofentemperatur | | | |
|---|---|---|---|---|---|---|
| | | | 250°C | | 450°C | |
| | | Bestandteile der Beschichtung | $T_{Max}$ [°C] | $\Delta T$ [°C] | $T_{Max}$ [°C] | $\Delta T$ [°C] |
| | 1 | Zn-basierte Fritte 30% Black 28 | 31,3 | 8,3 | 43,6 | 19,7 |
| | 2 | Bi-basierte Fritte 17,5% Brown 29 | 29,1 | 5,4 | 39,4 | 16,3 |
| | 3 | Bi-basierte Fritte 12,5% Brown 29, 5% PC2 (nano) | 31,8 | 5,3 | | |
| | 4 | Bi-basierte Fritte 12,5% Brown 29, 5% PC2 (nano) | 29,9 | 3,3 | | |
| | 5 | Bi-basierte Fritte 7,5% Brown 29, 10% PC2 (nano) | 29,9 | 2,8 | | |
| | 6 | Bi-basierte Fritte 15% Brown 29, 2,5% PC2 | 29,2 | 2,6 | | |
| | 7 | Bi-basierte Fritte 15% Brown 29, 2,5% PC3 | 30,2 | 1,4 | | |
| | 8 | Bi-basierte Fritte 15% Brown 29, 2,5% PC4 | 28 | 6,6 | | |
| | 9 | Bi-basierte Fritte 20% Brown 29, 2,5% PC2 | 28 | 6,3 | | |
| | 10 | Bi-basierte Fritte 17,5% Brown 29, 5% PC2 | 27,1 | 5,1 | 44,5 | 20,4 |
| | 11 | Bi-basierte Fritte 17,5% Brown 29, 2,5% PC1 | 27,8 | 5,1 | 44,7 | 17,9 |
| | 12 | Zn-basierte Fritte 17,5% Brown 29, 2,5% PC2 | 26 | 3,9 | 48,4 | 25,4 |
| | 13 | Zn-basierte Fritte 20% Brown 29, 2,5% PC2 | 27,8 | 5,6 | | |
| | 14 | Zn-basierte Fritte 17,5% Brown 29, 5% PC2 | 27 | 4,5 | | |
| | 15 | Bi-basierte Fritte 20% Brown 29, 2,5% PC2 | 29,6 | 6,1 | | |
| | 16 | Bi-basierte Fritte 15% Brown 29, 2,5% PC3 | 30,4 | 6,7 | | |
| | 17 | Bi-basierte Fritte 20% Brown 29, 2,5% PC3 | 29,8 | 6,6 | | |
| | 18 | Zn-basierte Fritte 40% $TiO_2$, 2,5% PC3 | 29,6 | 6,1 | | |
| | 19 | Zn-basierte Fritte 40% $TiO_2$, 2,5% PC2 | 27,7 | 4,2 | 51,4 | 27,5 |
| | 20 | Zn-basierte Fritte 30% Black 28, 2,5% PC3 | 29,2 | 6,1 | | |
| | 21 | Zn-basierte Fritte 30% Black 28, 2,5% PC2 | 29,3 | 6 | 49,4 | 24,1 |
| | 22 | Bi-basierte Fritte 17,5% Brown 29, 2,5% PC2 | 31,4 | 7,3 | | |

Probe 1 entspricht hier einer Beschichtungszusammensetzung für die der Temperaturverlauf nach Kurve 5 in Fig. 9 erhalten wurde.

Es zeigt sich hier, dass $T_{Max}$ mit Beschichtungen nach Ausführungsformen unterhalb den Maximaltemperaturen $T_{Max}$ bleibt, welche für bzw. mit herkömmlichen Beschichtungen erzielt werden (vergleiche beispielsweise Probe 2 mit Probe 6), oder dass bei stark unterschiedlichen Ausgangstemperaturen $T_0$ zumindest ein deutlich geringerer Temperaturunterschied $\Delta T$ erzielbar ist (vergleiche beispielsweise Probe 2 mit Probe 7).

<div align="center">Bezugszeichenliste</div>

| | |
|---|---|
| 1 | Glas- oder Glaskeramiksubstrat |
| 10 | Glas- oder Glaskeramikelement |
| 11, 12 | Oberflächen, Hauptflächen |
| 100 | Scheibenaufbau |
| 101 | Bereich einer Hauptfläche ohne Beschichtung |
| 102 | Bereich einer Hauptfläche mit Beschichtung |
| 2 | Beschichtung |
| 201 | Raster |
| 202 | Rahmen |
| 21 | Bindemittel |
| 22 | Pigmentpartikel |
| 23 | Füllstoffpartikel |
| 3 | Weitere Beschichtung |
| 4 | Backofen |
| 40 | Wärmebildkamera |
| 41 | Laborofen |
| 42 | Pyrometer |
| 5, 6, 7, 8 | Temperaturverlauf an der Oberfläche einer Ofentür in Abhängigkeit von der Zeit für unterschiedliche Beschichtungen |
| d | Dicke des Glas- oder Glaskeramiksubstrats |
| l | Länge des Substrats/Elements |
| b | Breite des Substrats/Elements |

**Patentansprüche**

1. Glas- oder Glaskeramikelement (10) für Haushalts- und/oder Heizgeräte umfassend ein transparentes Glas- oder Glaskeramiksubstrat (1) und eine auf wenigstens einer Hauptfläche (11, 12) des Glas- oder Glaskeramiksubstrats (1) zumindest bereichsweise angeordnete Beschichtung (2), wobei die Beschichtung (2) eine glasbasierte Beschichtung, vorzugsweise eine Emaillebeschichtung, ist, und wenigstens ein Pigment und wenigstens einen Füllstoff umfasst, wobei das wenigstens eine Pigment vorzugsweise ein IR-reflektierendes Material umfasst und wobei der wenigstens eine Füllstoff ein Material mit einer spezifischen molaren Wärmekapazität von höchstens 5 mJ/(mol·K) und bevorzugt einer Wärmeleitfähigkeit von höchstens 12 W/(m·K) umfasst.

2. Glas- oder Glaskeramikelement (10) für Haushalts- und/oder Heizgeräte umfassend ein transparentes Glas- oder Glaskeramiksubstrat (1) und eine auf wenigstens einer Hauptfläche (11, 12) des Glas- oder Glaskeramiksubstrats (1) zumindest bereichsweise angeordnete Beschichtung (2), wobei die Beschichtung (2) eine glasbasierte Beschichtung, vorzugsweise eine Emaillebeschichtung, ist, und wenigstens ein Pigment und wenigstens einen Füllstoff umfasst, vorzugsweise ein Glas- oder Glaskeramikelement (10) nach Anspruch 1, wobei das wenigstens eine Pigment vorzugsweise ein IR-reflektierendes Material umfasst und wobei der Füllstoff Zirkoniumoxid und/oder Hafniumoxid und/oder ein Chalkogenid, insbesondere ein Oxid, eines Seltenerdelements ist oder umfasst.

3. Glas- oder Glaskeramikelement (10) nach einem der Ansprüche 1 oder 2, wobei der Füllstoff $ZrO_2$ umfasst

und/oder

ein Chalkogenid, insbesondere ein Oxid, gemäß der folgenden Formel umfasst:

$$A_{2+X}B_Y D_Z E_7,$$

wobei A wenigstens ein Element aus der Gruppe der Seltenen Erden ist und als dreiwertiges Kation vorliegt, B wenigstens ein Element ist, welches als vierwertiges Kation vorliegt, D wenigstens ein Element ist, welches als fünfwertiges Kation vorliegt, und E wenigstens ein Element ist, welches als zweiwertiges Anion vorliegt, und wobei gilt:

$$0 \leq X \leq 1,1,$$

$$0 \leq Y \leq 3,$$

$$0 \leq Z \leq 1,6,$$

und wobei weiterhin gilt:

$$8 \leq 3X + 4Y + 5Z \leq 15.$$

4. Glas- oder Glaskeramikelement (10) nach einem der Ansprüche 1 bis 3, aufweisend wenigstens eines der folgenden Merkmale:

- das Pigment ist als Absorptionspigment ausgebildet,
- das Pigment umfasst Pigmentpartikel (22) mit einer Größenverteilung mit einem $d_{50}$-Wert des Äquivalent-durchmessers im Bereich zwischen 0,15 $\mu$m und 2 $\mu$m, bevorzugt im Bereich von 0,5 $\mu$m bis 1,8 $\mu$m,
- der Füllstoff umfasst Füllstoffpartikel (23) mit einer Größenverteilung mit einem $d_{50}$-Wert des Äquivalentdurch-messers im Bereich zwischen 0,15 $\mu$m bis 25 $\mu$m, bevorzugt im Bereich von 0,2 $\mu$m bis 25 $\mu$m, ganz besonders bevorzugt von 0,5 $\mu$m bis 5 $\mu$m,
- der Anteil des Pigments am Feststoffgehalt der Beschichtung (2) beträgt mindestens 7 Vol.-% und vorzugsweise höchstens 43 Vol.-%,
- der Anteil des Füllstoffs am Feststoffgehalt der Beschichtung (2) beträgt mindestens 1 Vol.% und vorzugsweise höchstens 15 Vol.-%,
- die Beschichtung (2) umfasst ein Bindemittel, wobei der Anteil des Bindemittels am Feststoffgehalt wenigstens 50 Vol.-% und vorzugsweise höchstens 85 Vol.-% beträgt.

5. Glas- oder Glaskeramikelement (10) nach einem der Ansprüche 1 bis 4, wobei das vom Pigment umfasste Material ein anorganisches Material, vorzugsweise ein hochtemperaturstabiles anorganisches Material, insbesondere ein hochtemperaturstabiles, anorganisches oxidisches Material ist oder umfasst, wobei vorzugsweise das Pigment ein chromhaltiges Pigment, bevorzugt ein chromhaltiges Eisenoxid, beispielsweise ein chromhaltiger Hämatit, und/oder ein chromhaltiger Spinell ist oder umfasst.

6. Glas- oder Glaskeramikelement (10) nach einem der Ansprüche 1 bis 5, wobei das Glas- oder Glaskeramiksubstrat (1) als Glassubstrat ausgebildet ist und vorzugsweise ein Kalk-Natron-Glas oder ein Borosilikatglas ist oder umfasst.

7. Glas- oder Glaskeramikelement (10) nach einem der Ansprüche 1 bis 6, aufweisend wenigstens eines der folgenden Merkmale:

- das Glas- oder Glaskeramiksubstrat (1) ist scheibenförmig ausgebildet, beispielsweise als flache oder als gekrümmte oder gebogene Scheibe,
- das Glas- oder Glaskeramiksubstrat (10) weist eine Dicke (d) zwischen mindestens 1 mm und höchstens 10 mm auf, vorzugsweise zwischen 2 mm und 8 mm,
- die Beschichtung (2) umfasst ein Absorptionspigment und weist eine Dicke zwischen mindestens 2 $\mu$m und 20 $\mu$m auf, bevorzugt zwischen 3 $\mu$m und 15 $\mu$m,
- das Verhältnis von Pigment zu Füllstoff in der Beschichtung (2) beträgt mindestens 0,75 : 1 und vorzugsweise höchstens 12,5 : 1, bezogen auf das Volumen.

8. Glas- oder Glaskeramikelement (10) nach einem der Ansprüche 1 bis 7, wobei die Beschichtung (2) bereichsweise so aufgebracht wird, dass wenigstens ein Bereich (102) einer Hauptfläche (11, 12) des Glas- oder Glaskeramiksubstrats (1) die Beschichtung (2) aufweist und wenigstens ein weiterer Bereich (101) der Hauptfläche (11, 12) des Glas- oder Glaskeramiksubstrats (1) von der Beschichtung (2) nicht bedeckt ist, wobei vorzugsweise wenigstens 60 %, bevorzugt wenigstens 65% und besonders bevorzugt wenigstens 70% der Hauptfläche (11, 12) die Beschichtung (2) aufweisen, wobei vorzugsweise höchstens 95 % der Hauptfläche (11, 12) mit der Beschichtung (2) beschichtet sind.

9. Glas- oder Glaskeramikelement (10) nach einem der Ansprüche 1 bis 8, wobei auf der Hauptfläche (11, 12) des Glas- oder Glaskeramiksubstrats (1), auf welcher die Beschichtung (2) angeordnet ist, keine weitere Beschichtung (3) angeordnet ist und/oder wobei der Gehalt der Beschichtung (2) an leitfähigen Oxiden, insbesondere an leitfähigen Oxiden ausgewählt aus der Gruppe mit den Oxiden Indiumzinnoxid, Fluor-Zinn-Oxid, Aluminium-Zink-Oxid und Antimon-Zinn-Oxid, kleiner als 500 ppm, bezogen auf das Gewicht, ist.

10. Paste umfassend wenigstens eine Bindemittel-Vorläuferphase, wenigstens ein Pigment und wenigstens einen Füllstoff, wobei die Bindemittel-Vorläuferphase vorzugsweise ein glasiges Material, insbesondere einen Glasfluss oder eine Glasfritte bildendes Material, ist oder umfasst, wobei das wenigstens eine Pigment vorzugsweise ein IR-reflektierendes Material umfasst und wobei der wenigstens eine Füllstoff ein Material mit einer spezifischen molaren Wärmekapazität von höchstens 5 mJ/(mol·K) und bevorzugt einer Wärmeleitfähigkeit von höchstens 12 W/(m·K) umfasst.

11. Paste, insbesondere nach Anspruch 10, umfassend wenigstens eine Bindemittel-Vorläuferphase, wenigstens ein Pigment und wenigstens einen Füllstoff, wobei die Bindemittel-Vorläuferphase vorzugsweise ein glasiges Material, insbesondere ein Glasfluss oder eine Glasfritte, ist oder umfasst, wobei das wenigstens eine Pigment vorzugsweise ein IR-reflektierendes Material umfasst und wobei der Füllstoff Zirkoniumoxid und/oder ein Chalkogenid, insbesondere ein Oxid, eines Seltenerdelements umfasst.

12. Paste nach einem der Ansprüche 10 oder 11, wobei der Füllstoff $ZrO_2$ ist oder umfasst,

und/oder
ein Chalkogenid, insbesondere ein Oxid, gemäß der folgenden Formel ist oder umfasst:

$$A_{2+X}B_Y D_Z E_7,$$

wobei A wenigstens ein Element aus der Gruppe der Seltenen Erden ist und als dreiwertiges Kation vorliegt, B wenigstens ein Element ist, welches als vierwertiges Kation vorliegt, D wenigstens ein Element ist, welches als fünfwertiges Kation vorliegt, und E wenigstens ein Element ist, welches als zweiwertiges Anion vorliegt, und wobei gilt:

$$0 \leq X \leq 1,1,$$

$$0 \leq Y \leq 3,$$

$$0 \leq Z \leq 1,6,$$

und wobei weiterhin gilt:

$$8 \leq 3X + 4Y + 5Z \leq 15.$$

**13.** Paste nach einem der Ansprüche 10 bis 12, aufweisend wenigstens eines der folgenden Merkmale:

- das Pigment ist als Absorptionspigment ausgebildet,
- das Pigment umfasst Pigmentpartikel (22) mit einer Größenverteilung mit einem $d_{50}$-Wert des Äquivalentdurchmessers im Bereich zwischen 0,15 $\mu$m und 2 $\mu$m, bevorzugt im Bereich von 0,5 $\mu$m bis 1,8 $\mu$m,
- der Füllstoff umfasst Füllstoffpartikel (23) mit einer Größenverteilung mit einem $d_{50}$-Wert des Äquivalentdurchmessers zwischen 0,15 $\mu$m und 25 $\mu$m, bevorzugt im Bereich von 0,2 $\mu$m bis 25 $\mu$m, besonders bevorzugt zwischen 0,5 $\mu$m und 5 $\mu$m,
- die Paste weist einen Feststoffgehalt auf, wobei der Anteil des Pigments am Feststoffgehalt mindestens 7 Vol.-% und vorzugsweise höchstens 43 Vol.-% beträgt,
- die Paste weist einen Feststoffgehalt auf, wobei der Anteil des Füllstoffs am Feststoffgehalt mindestens 1 Vol.-% und vorzugsweise höchstens 15 Vol.-% beträgt,
- die Paste weist einen Feststoffgehalt auf, wobei der Anteil des Bindemittels am Feststoffgehalt wenigstens 50 Vol.-% und vorzugsweise höchstens 85 Vol.-% beträgt,
- das Verhältnis von Pigment zu Füllstoff in der Paste beträgt zwischen mindestens 0,75 : 1 und vorzugsweise höchstens 12,5 : 1, bezogen auf das Volumen.

**14.** Paste nach einem der Ansprüche 10 bis 13, wobei das vom Pigment umfasste Material ein anorganisches Material, vorzugsweise ein hochtemperaturstabiles anorganisches Material, insbesondere ein hochtemperaturstabiles, anorganisches oxidisches Material ist oder umfasst, wobei vorzugsweise das Pigment ein chromhaltiges Pigment, bevorzugt ein chromhaltiges Eisenoxid, beispielsweise einen chromhaltigen Hämatit, und/oder ein chromhaltiger Spinell, ist oder umfasst.

**15.** Backofenscheibe, umfassend ein Glaselement (10) nach einem der Ansprüche 1 bis 9, wobei das Glaselement (10) auf nur einer Hauptfläche (11, 12) die Beschichtung (2) umfasst, wobei die Beschichtung (2) lateral strukturiert aufgebracht ist, wobei bevorzugt wenigstens 60 %, besonders bevorzugt wenigstens 65 % und ganz besonders bevorzugt wenigstens 70% der Hauptfläche (11, 12) des Glaselements (10) mit der Beschichtung (2) bedeckt sind, und wobei ganz besonders bevorzugt das Glaselement (10) keine weitere Beschichtung (3) umfassend oder aus einem transparenten leitfähigen Oxid umfasst, wobei vorzugsweise das Glaselement (10) als vorgespanntes Glaselement vorliegt.

**16.** Kaminsichtscheibe umfassend ein Glaskeramikelement (10) nach einem der Ansprüche 1 bis 5 und/oder 7 bis 9.

**17.** Verfahren zur Herstellung eines Glas- oder Glaskeramikelements (10) für Haushalts- und/oder Heizgeräte, insbesondere eines Glas- oder Glaskeramikelements (10) nach einem der Ansprüche 1 bis 9, umfassend die folgenden Schritte:

- Bereitstellung eines transparenten Glas- oder Glaskeramiksubstrates (1),
- Bereitstellen einer Paste, insbesondere einer Paste nach einem der Ansprüche 10 bis 14, umfassend ein Glaspulver mit einer Erweichungstemperatur $EW_{Glaspulver}$, wobei $EW_{Glaspulver}$ unterhalb der Verformungstemperatur des Substratmaterials liegt, zumindest ein IRreflektierendes Pigment und ein Siebdruckmedium,
- lateral strukturiertes Aufbringen der bereitgestellten Paste auf wenigstens eine Hauptfläche (11, 12) des bereitgestellten Glas- oder Glaskeramiksubstrats (1) mittels Siebdruck, sodass ein Nassfilm einer Beschichtung (2) erhalten wird,
- Einbrennen des Nassfilms unter Ausbildung der Beschichtung (2) bei Temperaturen im Bereich von $T_{Einbrand} > Tg_{Glaspulver}$,

vorzugsweise mit wenigstens einem der folgenden Merkmale:

- das Substrat (1) ist ein Glassubstrat, besonders bevorzugt ein Kalknatronglas oder ein Borosilikatglas und das Glassubstrat wird gemeinsam mit dem Einbrennen der aufgebrachten Beschichtung thermisch vorgespannt,
- die Einbrandtemperatur liegt im Bereich von 500°C bis 1000°C, bevorzugt im Bereich von 500°C bis 700°C,
- das Substrat (1) ist ein kristallisierbares Grünglas und gemeinsam mit dem Einbrand der Beschichtung (2) erfolgt die Keramisierung des Grünglases,
- der Einbrand der Beschichtung (2) erfolgt strukturerhaltend

- die Paste umfasst ein Absorptionspigment und die Dicke des Nassfilms beträgt mindestens 8 $\mu$m und höchstens 35 $\mu$m, bevorzugt mindestens 10 $\mu$m und höchstens 20 $\mu$m.

Fig. 1

Fig. 2

Fig. 3

Fig. 4

2

22  23  21

Fig. 5

10

202

I

b

201

Fig. 6

Fig. 7

## Fig. 8

100

2

3

3

## Fig. 9

**Temperatur der Ofentür bei Ofentemperatur von 250°C**

5

6

7

8

Temperatur [°C]

34
32
30
28
26
24
22
20

Zeit [min]

0    5    10    15    20    25    30

EUROPÄISCHER RECHERCHENBERICHT

Nummer der Anmeldung

EP 21 20 5687

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 603 830 A2 (CENTRAL GLASS CO LTD [JP]) 29. Juni 1994 (1994-06-29) * Spalte 3, Zeile 18 – Zeile 49; Beispiele 1,6 * ----- | 1-7, 10-14,17 | INV. C03C8/04 C03C8/14 C03C8/16 C03C8/20 C03C17/00 |
| X | JP H09 30834 A (NIPPON ELECTRIC GLASS CO) 4. Februar 1997 (1997-02-04) * Absätze [0001], [0002], [0004], [0006], [0007], [0018], [0019], [0023] – [0026], [0029], [0031] * ----- | 1-5,7,8, 10-14,17 | |
| X | DE 10 2014 101140 A1 (SCHOTT AG [DE]) 30. Juli 2015 (2015-07-30) * Absätze [0022], [0024], [0025], [0029], [0031], [0032], [0045], [0058] – [0060], [0065], [0067], [0069], [0075], [0076], [0080] * ----- | 1-17 | |
| A | DE 10 2011 115379 A1 (SCHOTT AG [DE]) 11. April 2013 (2013-04-11) * das ganze Dokument * ----- | 1-17 | |
| A | DE 10 2010 012841 A1 (SCHOTT AG [DE]) 29. September 2011 (2011-09-29) * das ganze Dokument * ----- | 1-17 | RECHERCHIERTE SACHGEBIETE (IPC) C03C |
| A | WO 2013/010019 A2 (SCHOTT CORP [US]; JAMES III WILLIAM H [US] ET AL.) 17. Januar 2013 (2013-01-17) * das ganze Dokument * ----- | 1-17 | |

Der vorliegende Recherchenbericht wurde für alle Patentansprüche erstellt

| Recherchenort | Abschlußdatum der Recherche | Prüfer |
|---|---|---|
| München | 23. März 2022 | King, Ruth |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 20 5687

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2022

| Im Recherchenbericht angeführtes Patentdokument | Datum der Veröffentlichung | Mitglied(er) der Patentfamilie | Datum der Veröffentlichung |
|---|---|---|---|
| EP 0603830 A2 | 29-06-1994 | DE 69310690 T2 | 04-09-1997 |
| | | EP 0603830 A2 | 29-06-1994 |
| | | JP 3173679 B2 | 04-06-2001 |
| | | JP H06183784 A | 05-07-1994 |
| | | US 5421877 A | 06-06-1995 |
| JP H0930834 A | 04-02-1997 | KEINE | |
| DE 102014101140 A1 | 30-07-2015 | CA 2938163 A1 | 06-08-2015 |
| | | DE 102014101140 A1 | 30-07-2015 |
| | | EP 3099641 A1 | 07-12-2016 |
| | | ES 2658411 T3 | 09-03-2018 |
| | | PL 3099641 T3 | 30-05-2018 |
| | | PT 3099641 T | 27-02-2018 |
| | | US 2016340232 A1 | 24-11-2016 |
| | | WO 2015113707 A1 | 06-08-2015 |
| DE 102011115379 A1 | 11-04-2013 | CN 103030303 A | 10-04-2013 |
| | | DE 102011115379 A1 | 11-04-2013 |
| | | EP 2592056 A1 | 15-05-2013 |
| | | JP 6342606 B2 | 13-06-2018 |
| | | JP 2013082615 A | 09-05-2013 |
| | | US 2013273320 A1 | 17-10-2013 |
| DE 102010012841 A1 | 29-09-2011 | DE 102010012841 A1 | 29-09-2011 |
| | | WO 2011116980 A1 | 29-09-2011 |
| WO 2013010019 A2 | 17-01-2013 | EP 2731919 A2 | 21-05-2014 |
| | | US 2013017387 A1 | 17-01-2013 |
| | | WO 2013010019 A2 | 17-01-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 3052769 A1
- US 5898180 A

- WO 2019101873 A1